(19) Europäisches Patentamt
European Patent Office
Office européen des brevets

(11) EP 1 542 067 A1

(12) **EUROPEAN PATENT APPLICATION**
published in accordance with Art. 158(3) EPC

(43) Date of publication:
**15.06.2005 Bulletin 2005/24**

(21) Application number: **03764211.3**

(22) Date of filing: **16.07.2003**

(51) Int Cl.⁷: **G02F 1/17**, G09F 9/00, G09F 9/37

(86) International application number:
**PCT/JP2003/009025**

(87) International publication number:
**WO 2004/008239 (22.01.2004 Gazette 2004/04)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **17.07.2002 JP 2002207795**
**17.07.2002 JP 2002208567**
**27.08.2002 JP 2002247184**
**09.12.2002 JP 2002356278**

(71) Applicant: **Bridgestone Corporation**
**Tokyo 104-8340 (JP)**

(72) Inventors:
- **SAKURAI, Ryou**
  **Kokubunji-shi, Tokyo 185-0003 (JP)**
- **MASUTANI, Maki**
  **Tokorozawa-shi, Saitama 359-0037 (JP)**
- **TAZAWA, Hare**
  **Kodaira-shi, Tokyo 187-0031 (JP)**
- **KITANO, Hajime**
  **Kodaira-shi, Tokyo 187-0031 (JP)**
- **NIHEI, Norio**
  **Kodaira-shi, Tokyo 187-0031 (JP)**
- **YAMAZAKI, Hirotaka**
  **Kunitachi-shi, Tokyo 186-0005 (JP)**
- **MASUDA, Yoshitomo**
  **Hamura-shi, Tokyo 205-0023 (JP)**
- **TANUMA, Itsuo**
  **Sayama-shi, Saitama 350-0335 (JP)**

(74) Representative: **Whalley, Kevin**
**Marks & Clerk**
**90 Long Acre**
**London WC2E 9RA (GB)**

(54) **IMAGE DISPLAY**

(57) An image display device constructed by: an image display means for displaying an image by moving chargeable particles arranged between electrodes by means of a voltage applied to the electrodes; and a light emission means for emitting a light to an image display surface of the image display means (first aspect of the invention). Moreover, an image display device which has an image display panel, in which two or more groups of particles or liquid powders having different colors and different charge characteristics are sealed between opposed two substrates, at least one of two substrates being transparent, and, in which the particles or the liquid powders, to which an electrostatic field produced by a pair of electrodes provided on one substrate or both substrates respectively is applied, are made to move so as to display an image, **characterized in that** a color filter is arranged to an outer surface or an inner surface of a transparent substrate of the image display panel so as to perform a color displaying (second aspect of the invention).

EP 1 542 067 A1

FIG. 1c

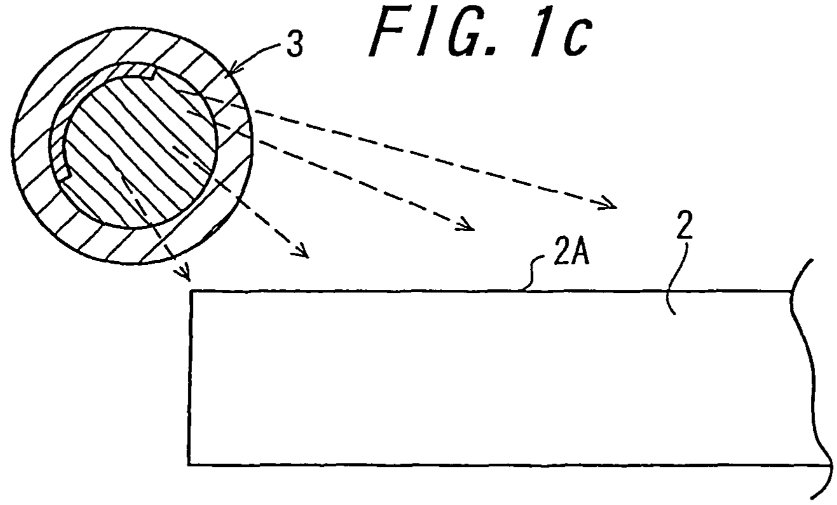

## Description

### TECHNICAL FIELD

The present invention relates to an image display device, which comprises an image display panel enables to repeatedly display or delete images accompanied by flight and movement of particles utilizing an electrostatic.

### BACKGROUND ART

As an image display device substitutable for liquid crystal display (LCD), image display devices with the use of technology such as an electrophoresis method, an electro-chromic method, a thermal method, dichroic-particles-rotary method are proposed.

As for these image display device, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability. Moreover, the known image display device has a drawback such that an image visibility is inferior (task to be solved by a first aspect of the invention).

As one method of solving various problems mentioned above, it is known an image display device which comprises an image display panel, in which two or more groups of particles having different colors and different charge characteristics are sealed between two substrates, at least one of two substrates being transparent, and, in which the particles, to which an electrostatic field produced by a pair of electrodes having different potentials is applied, are made to move by means of Coulomb's force so as to display an image. In addition, it is known an image display device which comprises an image display panel, in which the liquid powders, which indicate a high fluidity in an aerosol state such that solid-like substances are suspended in a gas stably as dispersoid, are sealed between opposed two substrates, at least one of two substrates being transparent, and, in which the liquid powders, to which an electrostatic field produced by a pair of electrodes provided on one substrate or both substrates respectively is applied, are made to move so as to display an image.

In the image display device mentioned above, it is possible to perform an image display having rapid response rate due to a dry type display, simple construction, inexpensive cost and excellent stability. However, since a color displaying is performed by indicating colors of the particles, there is a drawback such that it is difficult to achieve a high grade color displaying (task to be solved by a second aspect of the invention).

### DISCLOSURE OF INVENTION

An object of the first aspect of the invention is to eliminate the drawbacks mentioned above and to provide an image display device having an excellent image visibility, simple construction, inexpensive cost, rapid response rate of image display/deletion, excellent repeatable stability and excellent durability.

Moreover, an object of the second aspect of the invention is to eliminate the drawbacks mentioned above and to provide an image display device having rapid response rate due to dry type display, simple construction, inexpensive cost and excellent stability with an image display panel, which can further achieve a color image display with a high grade.

According to the first aspect of the invention, an image display device is characterized in that the improvement comprises: an image display means for displaying an image by moving chargeable particles arranged between electrodes by means of a voltage applied to the electrodes; and a light emission means for emitting a light to an image display surface of the image display means.

Moreover, in the image display device according to the first aspect of the invention, since the light emission means for emitting a light more effectively with respect to the image display surface of the image display means is provided, a visibility of the image to be displayed becomes excellent. Particularly, when use is made of the image display means in which the charged particles are moved between the electrodes so as to display an image, especially when use is made of the image display means in which the charged particles are moved between the electrodes by means of an electrostatic force, it is possible to obtain the image display device having rapid response rate of image display/deletion, excellent repeatable stability and excellent durability. In addition, the image display device according to the invention constructed mainly by the image display means and the light emission means mentioned above has a simple construction and an inexpensive cost.

As a preferred embodiment of the image display device according to the first aspect of the invention, the particles are constructed by particles having the same color and the same charge characteristics; the particles are constructed by particles having different colors and different charge characteristics; the particles are arranged in a space defined by partition walls; the partition walls are arranged around the space and the image display means has a plurality of pixels defined by the partition walls; a first electrode is arranged in the space at a side of the image display surface and a second electrode is arranged at the other side thereof; both of a first electrode and a second electrode are arranged in the space at a reverse side of the image display surface; a gas is filled in the space; the space is a pressure reduction state of $10^5$ - $10^{-4}$ Pa; the light emission means comprises a linear illuminant extending along a peripheral of the image display means; the light emission means comprises a light guide plate arranged at a front surface of the light display surface of the image display means, and a light emitted from the linear illuminant to a side surface or a rear surface of the light guide plate is reflected by the light guide plate and is emitted to the image display surface; and the light guide plate comprises a substrate for introducing a light from its side surface or a rear surface, a dotted or linear reflection-layer arranged to the substrate for reflecting a light toward the image display surface, and a dark color-layer arranged to a view surface of the reflection-layer.

Moreover, as an another preferred embodiment of the image display device according to the first aspect of the invention, a V-recess having a prism surface used for reflecting a light emitted from the linear illuminant is arranged to a surface of the light guide plate, and a V-recess angle defined by an angle of the prism surface of the V-recess with respect to a surface of the light guide plate is set to 25° - 40°; a reflective property in the case of a white color displaying is such a state that an angle of incident light, at which a reflection rate is 0.5 in the case that an angle of incident light is varied by 15° - 90° and a reflection rate at 15°, is not less than 40°; a view angle in the case of a white color displaying is not less than 40° at one side on a half bandwidth; the image display means and the light emission means have flexibility; the image display comprises the image display surface at its both surfaces; and as the particles use is made of liquid powders, which indicate a high fluidity in an aerosol state such that solid-like substances are suspended in a gas stably as dispersoid.

Also in all the preferred embodiments mentioned above according to the first aspect of the invention, it is possible to perform more effectively the image display device according to the first aspect of the invention.

Then, according to a first embodiment of the second aspect of the invention, an image display device which comprises an image display panel, in which two or more groups of particles having different colors and different charge characteristics are sealed between opposed two substrates, at least one of two substrates being transparent, and, in which the particles, to which an electrostatic field produced by a pair of electrodes provided on one substrate or both substrates respectively is applied, are made to move so as to display an image, is characterized in that a color filter is arranged to an outer surface or an inner surface of a transparent substrate of the image display panel so as to perform a color displaying.

Moreover, according to a second embodiment of the second aspect of the invention, an image display device which comprises an image display panel, in which the liquid powders, which indicate a high fluidity in an aerosol state such that solid-like substances are suspended in a gas stably as dispersoid, are sealed between opposed two substrates, at least one of two substrates being transparent, and, in which the liquid powders, to which an electrostatic field produced by a pair of electrodes provided on one substrate or both substrates respectively is applied, are made to move so as to display an image, is characterized in that a color filter is arranged to an outer surface or an inner surface of a transparent substrate of the image display panel so as to perform a color displaying.

In the first embodiment and the second embodiment of the second aspect of the invention, the color filter having different colors of R(red), G(green) and B (blue) is arranged to the outer surface or the inner surface of the transparent substrate. Then, one pixel of the color displaying is constructed by three image display elements to which at least one of R, G and B of the color filter are arranged respectively, and one of the particles or liquid powders is made to be the white color, while the other is made to be the black color. Under such a condition, the white color particles or liquid powders are made to be existent to the display surface so as to display the R, G or B color of the color filter, while the black color particles or liquid powders are made to be existent to the display surface so as to display the black color, so that it is possible to perform the color displaying. In this manner, it is possible to realize a high grade color image display.

As a preferred embodiment of the image display device according to the first embodiment of the second aspect of the invention, the surface charge density in an absolute value of the particles measured by using the carrier in accordance with a blow-off method is 5 - 150 $\mu C/m^2$; and the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the discharge.

Also in all the preferred embodiments mentioned above according to the first embodiment of the second aspect of the invention, it is possible to perform more effectively the image display device according to the first embodiment of the second aspect of the invention.

Moreover, as a preferred embodiment of the image display device according to the second embodiment of the second aspect of the invention, an apparent volume in a maximum floating state of the liquid powders is two times or more than that in none floating state; a time change of the apparent volume of the liquid powders satisfies the following formula: $V_{10}/V_5 > 0.8$; here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state; and an average particle diameter d(0.5) of the liquid powders is 0.1 - 20 μm.

Also in all the preferred embodiments mentioned above according to the second embodiment of the second aspect of the invention, it is possible to perform more effectively the image display device according to the second embodiment of the second aspect of the invention.

In the second embodiment of the first aspect and the second aspect of the invention, a term "liquid powder" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powder.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the image display device according to the invention, a solid material is used as a dispersant.

## BRIEF DESCRIPTION OF DRAWINGS

Figs. 1a - 1c are schematic views respectively showing a side view, a perspective view of one embodiment of an image display device according to the invention, and a cross sectional view of a linear illuminant portion.

Figs. 2a - 2c are cross sectional views respectively illustrating one embodiment of a display element of an image display panel according to the invention and one embodiment of its display operation theory.

Figs. 3a - 3c are cross sectional views respectively depicting another embodiment of a display element of an image display panel according to the invention and another embodiment of its display operation theory.

Figs. 4a - 4c are cross sectional views respectively showing still another embodiment of a display element of an image display panel according to the invention and still another embodiment of its display operation theory.

Figs. 5a - 5c are cross sectional views respectively illustrating still another embodiment of a display element of an image display panel according to the invention and still another embodiment of its display operation theory.

Figs. 6a - 6c are cross sectional views respectively depicting still another embodiment of a display element of an image display panel according to the invention and still another embodiment of its display operation theory.

Fig. 7 is a schematic view showing a method of measuring a surface potential of the chargeable particle used in the image display device according to the invention.

Fig. 8 is a perspective view illustrating one embodiment of a linear illuminant used in the invention.

Fig. 9 is a cross sectional view depicting a cutout portion along IX-IX line shown in Fig. 8.

Fig. 10 is a perspective view showing one embodiment of a light transmission tube shown in Fig. 8.

Fig. 11 is a cross sectional view illustrating a cutout portion along XI-XI line shown in Fig.10.

Fig. 12 is a cross sectional view depicting a cutout portion along XII-XII line shown in Fig. 11.

Fig. 13 is a plan view showing another embodiment of the image display device according to the invention.

Fig. 14 is a plan view illustrating still another embodiment of the image display device according to the invention.

Fig. 15 is a plan view depicting still another embodiment of the image display device according to the invention.

Fig. 16 is a cross sectional view showing a cutout portion along XVI-XVI line shown in Fig. 15.

Fig. 17 is a plan view illustrating still another embodiment of the image display device according to the invention.

Fig. 18 is a plan view depicting still another embodiment of the image display device according to the invention.

Fig. 19 is a plan view showing still another embodiment of the image display device according to the invention.

Fig. 20 is a plan view illustrating still another embodiment of the image display device according to the invention.

Fig. 21 is a plan view depicting still another embodiment of the image display device according to the invention.

Fig. 22 is an enlarged cross sectional view showing a light guide plate shown in Fig. 21.

Figs. 23a and 23b are a side view and a perspective view respectively illustrating one embodiment of the image display device according to the invention.

Fig. 24 is a schematic view depicting a detail of the image guide plate of the image display device according to the invention.

Fig. 25 is a schematic view explaining a V-recess angle in the image guide plate of the image display device according to the invention.

Fig. 26 is a graph showing a relation between an incident angle of a light and a reflection coefficient in the image display device according to the invention.

Fig. 27 is a schematic view illustrating one embodiment of an incident angle dependency measuring apparatus of a reflection coefficient used to obtain the results of Fig. 26.

Fig. 28 is a graph depicting a relation between the V-recess and an efficiency of the light guide plate in the image display device according to the invention.

Fig. 29 is a graph showing a relation between an emanating and brightness in the linear illuminant of the image display device according to the invention.

Fig. 30 is a schematic view illustrating one embodiment of a visibility angle characteristic measuring apparatus of a reflection coefficient used to obtain the results of Fig. 29.

Fig. 31 is a graph depicting a visibility angle characteristic in the image display device according to the invention.

Figs. 32a and 32b are schematic view respectively showing one embodiment in the image display element of the image display panel constituting the image display device according to the invention.

BEST MODE FOR CARRYING OUT THE INVENTION

At first, common construction of the image display device according to a first aspect and a second aspect of the invention.

Figs. 1a - 1c are schematic views respectively showing one embodiment of the image display device according to the invention, in which Fig. 1a shows its side view, Fig. 1b illustrates its perspective view and Fig. 1c depicts a cross sectional view showing a linear illuminant.

As shown in Figures, an image display device a comprises: an image display panel 2 as the image display means for displaying an image by moving chargeable particles between electrodes by means of a voltage applied to the electrodes; and a linear illuminant 3 as the light emission means for emitting a light to an image display surface 2A of the image display panel 2. In this case, since a light from the linear illuminant 3 is emitted to the image display surface 2A of the image display panel 2, the image display surface 2A has an excellent image visibility. It should be noted in the image display device 1 that a housing 4 as a cover for covering the linear illuminant 3 is arranged.

As the chargeable particles used in the image display panel 1 as the image display means, the following ① or ② is for example utilized.

① Particles constructed by particles having the same color and charge characteristics.

② Particles constructed by plural groups of, for example, two groups of particles having different colors and charge characteristics.

At first, one construction of the image display panel using the particles ① mentioned above as the chargeable particles will be explained with reference to Figs. 2 - 4. Figs. 2 - 4 are cross sectional views respectively showing one embodiment of the image display panel according to the invention.

In the image display panel shown in Figs. 2a - 2c, a transparent display electrode 13 is arranged to an inner side of a transparent substrate 11 (a side opposed to an opposed substrate) in a space defined by partition walls 16 in such a manner that the partition walls surround the space, and an opposed electrode 14 and a color plate 17 are arranged to an inner side of an opposed substrate 12 (a side opposed to the transparent substrate).

In Figs. 2a - 2c, the opposed electrode 14 is arranged from an edge of the opposed substrate 12 to an inner side of the partition wall 16, but it may be arranged only on the opposed substrate 12 or may be arranged only to an inner side of the partition wall 16. Chargeable particles (negatively chargeable particles in Fig. 2) 15 are arranged in the space surrounded by the partition walls 16 between the transparent substrate 11 and the opposed substrate 12.

Fig. 2a shows a state in which a voltage is not applied. Under such a condition, if a voltage is applied from a power source not shown in such a manner that a side of the display electrode 13 becomes a high potential and a side of the opposed electrode 14 becomes a low potential, the negatively chargeable particles 15 are moved and adhered to a side of the transparent substrate 11 by means of an electrostatic force as shown in Fig. 2b. In this case, the display surface viewed from a side of the transparent substrate 11 looks like a color of the negatively chargeable particles 15. Then, if a voltage is applied in such a manner that the display electrode 13 becomes a low potential and the opposed electrode 14 becomes a high potential by switching the potentials, the negatively chargeable particles 15 are moved and adhered to a side of the opposed substrate 12 by means of an electrostatic force as shown in Fig. 2c. In this case, the display surface viewed from a side of the transparent substrate 11 looks like a color of the color plate 17.

It is possible to display repeatedly the states shown in Figs. 2b and 2c only by reversing the potentials as mentioned above, and thus it is possible to change colors of the display surface reversibly by reversing the potentials of the power source. For example, if it is assumed that the negatively chargeable particles 15 are a white color and the color plate 17 is a black color, or, that the negatively chargeable particles 15 are a black color and the color plate 17 is a white color, the reversible display between white color and black color can be achieved.

In the image display panel shown in Figs. 3a - 3c, the electrodes are not arranged between the substrates, and the negatively chargeable particles 15 and the color plate 17, which are the display element of the display plate, are arranged in the space between the transparent substrate 11 and the opposed substrate 12 surrounded by the partition walls 16.

In the display method in which no electrode is arranged as shown in Figs. 3a - 3c, an electrostatic latent image is applied to an outer surface of the substrate, and the particles having predetermined charge characteristics and colors are pulled or rebound to the substrate by means of an electrostatic field produced in accordance with the electrostatic latent image are viewed from an outside of the image display device through the transparent substrate. The formation of the electrostatic latent image can be performed by a method in which the electrostatic latent image obtained by a normal electro photographic system using an electro photographic photo-conductor is transferred on the image display substrate or by a method in which the electrostatic latent image is directly formed by means of an ion flow or an electrostatic record head.

Fig. 3a shows a state such that the negatively chargeable particles 15 are arranged between the opposed two substrates, Fig. 3b illustrates a state such that a side of the transparent substrate 11 is a positive electrostatic field, and Fig. 11c depicts a state such that a side of the opposed substrate 12 is a positive electrostatic field. Its driving theory is the same as that of the image display panel using the electrodes shown in Figs. 2a - 2c.

In Figs. 4a - 4c, the display electrode 13, the opposed electrode 14 the color plate 17 and an insulation member 18 are arranged at a side of the opposed substrate 12 opposed to the transparent substrate 11. As shown in Fig. 4a, the negatively chargeable particles 15 are arranged in the space between the opposed substrates 11 and 12 surrounded by the partition walls 16. Under such a condition, if a voltage is applied from a power source in such a manner that a side of the display electrode 13 becomes a low potential and a side of the opposed electrode 14 becomes a high potential, the negatively chargeable particles 15 are moved and adhered to a side of the opposed electrode 14 by means of an electrostatic force as shown in Fig. 4b. In this case, the display surface viewed from a side of the transparent substrate 11 looks like a color of the color plate 17. Then, if a voltage is applied in such a manner that the display electrode 13 becomes a high potential and the opposed electrode 14 becomes a low potential by switching the potentials, the negatively chargeable particles 15 are moved and adhered to a side of the display electrode 13 by means of an electrostatic force as shown in Fig. 4c. In this case, the display surface viewed from a side of the transparent substrate 11 looks like a color of the negatively chargeable particles 15.

It is possible to display repeatedly the states shown in Figs. 4b and 4c only by reversing the potentials as mentioned above, and thus it is possible to change colors of the display surface reversibly by reversing the potentials of the power source.

In the embodiment mentioned above, the explanation is made to a case such that the negatively chargeable particles are used as the chargeable particles, but it is possible to construct the reversible display panel in accordance with the same theory even if use is made of the positively chargeable particles as the chargeable particles.

Then, one construction of the image display panel using the particles ② mentioned above as the chargeable particles will be explained with reference to Figs. 5a - 5c and Figs. 6a - 6c. Figs. 5a - 5c and Figs. 6a - 6c are cross sectional views respectively showing one embodiment of the image display panel according to the invention.

In the image display panel shown in Figs. 5a - 5c, two groups of particles having different colors and different charge characteristics are sealed between the transparent substrate 11 and the opposed substrate 12 in a space defined by the partition walls 16, and the particles are moved by means of an electrostatic force produced by applying an electrostatic field produced from two groups of electrodes having different potentials to the particles, so as to display the image. In the image display panel mentioned above, two groups of electrodes 13 and 14 having different potentials are arranged through the insulation member 18 to a side of the opposed substrate opposed to the transparent substrate 11.

Fig. 5a shows a state such that the negatively chargeable particles 15A and the positively chargeable particles 15B are arranged between the opposed substrates 11 and 12. Under such a condition, if a voltage is applied from the power source in such a manner that a side of the display electrode 13 becomes a low potential and a side of the opposed substrate 14 becomes a high potential, the positively chargeable particles 15B are moved and adhered to a side of the display electrode, while the negatively chargeable particles 15A are moved and adhered to a side of the opposed electrode 14, by means of an electrostatic force as shown in Fig. 5b. In this case, the display surface viewed from the transparent substrate looks like a color of the negatively chargeable particles 15.

It is possible to display repeatedly the states shown in Figs. 5b and 5c only by reversing the potentials as mentioned above, and thus it is possible to change colors of the display surface reversibly by reversing the potentials of the power source. For example, if it is assumed that the negatively chargeable particles 15A are a white color and the positively chargeable particles 15B are a black color, or, that the negatively chargeable particles 15A are a black color and the positively chargeable particles 15B are a white color, the reversible display between white color and black color can be achieved.

In the image display panel shown in Figs. 6a - 6c, the transparent display electrode 13 is arranged to an inner side of the transparent substrate 11 in a space defined by partition walls 16 and the opposed electrode 14 is arranged to an inner side of the opposed substrate 12 in the space defined by the partition walls 16. The negatively chargeable particles 15A and the positively chargeable particles 15B are arranged between the transparent substrate 11 and the opposed substrate 12 in the space surrounded by the partition walls 16.

Fig. 6a shows a state in which a voltage is not applied. Under such a condition, if a voltage is applied from the power source not shown in such a manner that a side of the display electrode 13 becomes a high potential and a side of the opposed electrode 14 becomes a low potential, the negatively chargeable particles 15A are moved and adhered to a side of the transparent substrate 11 and the positively chargeable particles 15B are moved and adhered to a side of the opposed substrate 12 by means of an electrostatic force as shown in Fig. 6b. In this case, the display surface viewed from a side of the transparent substrate 11 looks like a color of the negatively chargeable particles 15A. Then, if a voltage is applied in such a manner that the display electrode 13 becomes a low potential and the opposed electrode 14 becomes a high potential by switching the potentials, the negatively chargeable particles 15A are moved and adhered to a side of the opposed substrate 12 and the positively chargeable particles 15B are moved and adhered to a side of the transparent substrate 11 by means of an electrostatic force as shown in Fig. 6c. In this case, the display surface viewed from a side of the transparent substrate 11 looks like a color of the positively chargeable particles 15B.

It is possible to display repeatedly the states shown in Figs. 6b and 6c only by reversing the potentials as mentioned above, and thus it is possible to change colors of the display surface reversibly by reversing the potentials of the power source. For example, if it is assumed that the negatively chargeable particles 15A are a white color and the positively chargeable particles 15B are a black color, or, that the negatively chargeable particles 15A are a black color and the positively chargeable particles 15B are a white color, the reversible display between white color and black color can be achieved.

Also in the image display panel using the particles ②, as is the same as the embodiment shown in Fig. 2, the display method in which no electrode is arranged may be applied (this figure is not shown here). That is, an electrostatic latent image is applied to an outer surface of the substrate, and the particles having predetermined charge characteristics and colors are pulled or rebound to the substrate by means of an electrostatic field produced in accordance with the electrostatic latent image are viewed from an outside of the image display device through the transparent substrate.

In the image display panels shown in Figs. 2 - 6, since respective chargeable particles are adhered to the electrode by means of an imaging force, a display image can be maintained for a long time after a voltage apply is stopped, thereby showing an excellent memory property.

Moreover, in the embodiments mentioned above, the explanation is made to the example using the particles, but the same explanation can be applied to the example using the liquid powders.

Then, respective construction members of the image display panels mentioned above will be explained.

As the substrate, it is preferred that at least one substrate is a transparent substrate through which a color of the particles or a color of the color plate can be observed from outside of the display panel and use is made of a material having an excellent transmission factor of visual light and an excellent heat resistance. The opposed substrate may be transparent or may be opaque.

Examples of the substrate material include polymer sheets such as polyethylene terephthalate, polyether sulfone, polyethylene, polycarbonate, polyimide, acryl or silicone resin and inorganic sheets such as glass, quartz or so.

The thickness of the substrate is preferably 2 to 5000 μm, more preferably 5 to 1000 μm. When the thickness is too thin, it becomes difficult to maintain strength and distance uniformity between the substrates, and when the thickness is too thick, vividness and contrast as a display capability degrade.

With respect to the electrodes, in the case that use is made of the transparent electrode as the display electrode 13 shown in Figs. 1 and 6, the display electrode is formed of electroconductive materials, which are transparent and have pattern formation capability, on the transparent substrate. As such electroconductive materials, metals such as aluminum, silver, nickel, copper and gold, or transparent electroconductive metal oxides such as ITO, electroconductive tin oxide and electroconductive zinc oxide formed in the shape of thin film by sputtering method, vacuum vapor deposition method, CVD method, and coating method, or coated materials obtained by applying the mixed solution of an electroconductive agent with a solvent or a synthetic resin binder are used.

Typical examples of the electroconductive materials include cationic polyelectrolyte such as benzyltrimethylammonium chloride, tetrabutylammonium perchlorate and so on, anionic polyelectrolyte such as polystyrenesulfonate, polyacrylate, and so on, or electroconductive fine powders of zinc oxide, tin oxide, or indium oxide. Additionally, the thickness of the electrode may be suitable unless the electroconductivity is absent or any hindrance exists in optical transparency, and it is preferable to be 3 to 1000 nm, more preferable to be 5 to 400 nm. The foregoing transparent electrode materials can be employed as the electrode arranged on the opposed substrate. However, non-transparent electrode materials such as aluminum, silver, nickel, copper, and gold can be also employed if it is not necessary to use the transparent electrode. Particularly, it is preferred to use the metal electrode having a low resistance and inexpensive cost such as aluminum, copper and so on.

It is preferred that an insulation coating layer is formed on the electrode so as not to reduce charges of the charged particles. As such insulation coating layer, if use is made of a positively chargeable resin with respect to the negatively chargeable particles and a negatively chargeable resin with respect to the positively chargeable particles, the charges of the particles are to be difficult to reduce and it is particularly preferable.

In this case, as the applied outer voltage, use may be made of a direct current, or may be superimposed with a direct current or an alternate current.

In the image display panel used in this invention, it is preferable to form partition walls 16 around each display element as shown in respective figures. The partition walls may be formed in two parallel directions. By this structure, unnecessary particle movement in the direction parallel with the substrate is prevented. Further, durability repeatability and memory retention are assisted. At the same time, the distance between the substrates is made uniform as reinforcing the strength of an image display panel.

The formation method of the partition wall is not particularly restricted, however, a screen printing method wherein pastes are overlapped by coating repeatedly on a predetermined position by screen plate; a sandblast method wherein partition materials are painted with a desired thickness entirely over the substrate and then after coating resist pattern on the partition materials which is wanted to be left as a partition, jetting abrasive to cut and remove partition materials aside from the partition part; lift-off method (additive method) wherein a resist pattern is formed on the substrate using photosensitive polymer, and then after burying paste into a resist recess, removing the resist; photosensitive paste method wherein the photosensitive resin composition containing the partition materials is applied over the substrate and then obtaining a desired pattern by exposure & developing; and mold formation method wherein paste containing the partition materials is applied over the substrate and then forming a partition by compression bonding & pressure forming the dies having rugged structure; and so on are adopted. Further, modifying the mold formation method, relief embossing method wherein a relief pattern provided by a photosensitive polymer composition is used as a mold is also adopted.

As the chargeable particles, although any of colored particles negatively or positively chargeable having capability of easily moving by an electrostatic force are employable, spherical particles with light specific gravity and excellent chargeable property are particularly preferable.

In the case of the image display panels shown in Figs. 2 - 4, the particles are constructed by the single color particles, and it is preferred to use the particles having a white color or a black color. The average particle diameter is preferable to be 0.1 to 50 μm, particularly to be 1 to 30 μm. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, however, the memory characteristic will degrade.

Although the method for charging the particles negatively or positively is not particularly limited, a corona discharge method, an electrode injection-charge method, a friction charge method and so on are employable. A charge amount of the particles is depend on the measuring condition, i.e., the charge amount of the particles in the image display device is depend on its initial charge amount, a contact with the substrate, a contact between the particles having different kinds, and a charge decrease due to a lapse of time. Particularly, it is understood that a main factor is "the contact between the particles having different kinds", i.e., a saturated value of a charge behavior due to the contact between two particles. Therefore, it is important to know a difference of the charge characteristics between two particles on the charge amount, i.e., to know a difference of a work function. However, it is difficult to know these differences by an easy measurement.

The inventors investigated theses differences and find that it is possible to estimate these differences relatively by using same carriers and measuring the charge amount of respective particles by means of a blow-off method. Moreover, if the measuring results are defined by a surface charge density, it is possible to perform an estimation of the charge amount of the particles as a suitable method for the image display device.

The measuring method will be explained later in detail. By performing the blow-off method, it is possible to contact the particles and the carrier particles sufficiently and to measure the charge amount per unit weight of respective particles by measuring its saturated charge amount. Then, it is possible to calculate the surface charge density of respective particles by obtaining a particle diameter and a specific gravity of respective particles separately.

In the image display device, since a particle diameter of the particles to be used is small and an affection of gravity is too small to neglect its affection, the specific gravity is not affected to the movement of the particles. However, on the charge amount of the particles, if the particles have a same particle diameter and a same average charge amount per unit weight, the maintained charge amounts are different by two times in the case that the specific gravities of the particles are different by two times. Therefore, it is understood that it is preferred to estimate the charge characteristics of the particles used in the image display device by the surface charge density (unit: $\mu C/m^2$) which is irrelevant to the specific gravity of the particles.

In the image display panel utilizing the particles ② , it is necessary to obtain some degree of difference on the surface charge density so as to differentiate the moving directions of the two particles, but it is not always necessary to make the difference on the surface charge density larger. In the image display device utilizing the particle movement, when a particle diameter of the particles is large, the main factor for determining a fly/move electrostatic field (voltage) of the particles is an electric imaging force. Therefore, in order to move the particles by a low electrostatic field (voltage), it is preferred to make the charge amount low. Moreover, when a particle diameter of the particles is small, the main factor for determining the fly/move electrostatic field (voltage) is a non-electric force such as an intermolecular force, a liquid bridging force and so on. Therefore, in order to move the particles by a low electrostatic field (voltage), it is preferred to make the charge amount high. However, since theses phenomena are largely depend on surface properties (material, shape) of the particles, it is not possible to define only by the particle diameter and the charge amount.

The inventors find that, in the image display panel utilizing the particles *② having an average particle diameter of 0.1 - 50 $\mu m$, when the absolute value of the difference between the surface charge densities of two groups of particles, which are measured by the blow-off method using the same kind of particles, is 5 - 150 $\mu C/m^2$, it is possible to obtain the particles usable for the image display device.

Measuring theory and method of the blow-off method are as follows. In the blow-off method, a mixture of the particles and the carriers are placed into a cylindrical container with nets at both ends, and high-pressure gas is blown from the one end to separate the particles and the carriers, and then only the particles are blown off from the mesh of the net. In this occasion, charge amount of reverse blown polarity remains on the carriers with the same charge amount of the particles carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

In the invention, as a blow-off powder charge amount measuring instrument, TB-200 produced by Toshiba Chemical Co., Ltd. was used, and F963-2535 available from Powder TEC Co., Ltd. was employed as the same kind of carriers. Then, the charge density per unit surface area (unit: $\mu C/m^2$) was measured.

The particle diameter was measured in accordance with the following method. Moreover, the specific gravity was measured with the use of a hydrometer produced by Shimadzu Seisakusho Ltd. (brand name: Multi volume Density Meter H1305).

Specifically, the particle diameter was measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory). Then, it was assumed that an average particle diameter d(0.5) ($\mu m$) was a particle diameter indicated by $\mu m$ at which the particle diameters of 50 % of particles were larger and the particle diameters of 50 % of particles were smaller.

Because it is necessary for the particles to hold the charged electric charge, insulating particles with the volume specific resistance of $1\times10^{10}$ $\Omega\cdot cm$ or greater are preferable, and in particular, insulating particles with the volume specific resistance of $1\times10^{12}$ $\Omega\cdot cm$ or greater are more preferable.

Further, the particles with slow charge attenuation property evaluated by the measuring method below are more preferable.

That is, the particles are made into a film having a thickness of 5 - 100 μm by means of a press method, a heating/melting method, a casting method and so on, and the voltage of 8 kV is applied to a Corona generator disposed with a distance of 1 mm to the film surface so as to generate Corona discharge, which charges the film surface. Then, the change of the surface potential is measured to determine the suitability. In this occasion, it is preferable to select the material whose maximum surface potential will be greater than 300 V after 0.3 seconds, more preferable to select the material whose maximum surface potential will be greater than 400 V after 0.3 second as the material for composing the particles.

Additionally, the foregoing surface potential is measured by means of an instrument (CRT2000 produced by QEA Inc.) as shown in Fig. 7. In this instrument both end portions of a roll shaft 20 being held with chuck 21, compact scorotron discharger 22 and surface potential meter 23 are spaced with predetermined interval to form a measurement unit 24. Facedly deploying the measurement unit 24 with a distance of 1 mm from the surface of the roll shaft 20 to which a sample film is provided, and by moving the measurement unit 24 from one end portion of the roll shaft 20 to the other end portion with an uniform speed, with the state that the roll shaft 20 remains stopping and while giving surface charge, a method of measuring its surface potential is preferably adopted. Moreover, measurement environment should be settled at the temperature of 25 ± 3°C and the humidity of 55 ± 5% RH.

If the particles used in this invention satisfy electrostatic property and so on, the particles may be formed by any materials. For example, it is formed by resin, charge control agent, coloring agent, inorganic additive and so on, or, by coloring agent and so on only.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc.

Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake.

Examples of orange pigments include red chrome yellow, molybdenum orange, permanent orange GTR, pyrazolone orange, Balkan orange, indusren brilliant orange RK, benzidine orange G, and Indusren brilliant orange GK.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake.

Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indusren blue BC.

Examples of green pigments include chrome green, chromium oxide, pigment green B, Malachite green lake, and final yellow green G.

Further, examples of white pigments include zinc white, titanium oxide, antimony white, and zinc sulphide.

Examples of extenders include baryta powder, barium carbonate, clay, silica, white carbon, talc, and alumina white.

Furthermore, there are Nigrosine, Methylene Blue, rose bengal, quinoline yellow, and ultramarine blue as various dyes such as basic dye, acidic dye, dispersion dye, direct dye, etc.

These coloring agents may be used alone or in combination of two or more kinds thereof.

Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

In the image display panels shown in Figs. 5 and 6, the particles having different colors and different charge characteristics are selected from the chargeable particles mentioned above and used. Particularly, it is preferred to use a combination of the positively or negatively chargeable particles having a white color and the negatively or positively chargeable particles having the other color. In the normal case, the positively chargeable particles are used at positively chargeable particles : negatively chargeable particles = 1 : 0.5 - 1.5 (volume ratio).

The distance between the transparent substrate and the opposed substrate is suitably adjusted in a manner where the particles can move and maintain the contrast of image display; however, it is adjusted usually within 10 to 5000 μm, preferably within 30 to 500 μm. Moreover, in the case such that the partition walls are arranged all around the display element, it is preferred that a region defined by the partition walls is about 35 - 500 μm × 35 - 500 μm.

The particle filling amount (volume occupying rate) of the particles existing in the space between the faced substrates is preferable to be 3 to 80%, more preferable to be 10 to 70%.

In the image display panel according to the invention, use is preferably made of a member having a contact surface chargeable in a reverse charge characteristic with respect to the particles as at least one member to which the chargeable particles is contacted. That is, use is preferably made of the member having the positively chargeable contact surface with respect to the negatively chargeable particles, and use is preferably made of the member having the negatively chargeable contact surface with respect to the positively chargeable particles. In this manner, the charged state of the particles is maintained stably. As the members, use may be made of substrate, electrode, partition wall, color panel and so on to which the particles are contacted. In addition, the whole member may be formed by a material chargeable in the reverse charge characteristic with respect to the particles, and also the member, a part of which is coated by a material chargeable in the reverse charge characteristic with respect to the particles, may be used.

In the image display panel mentioned above, plural of the foregoing display elements as shown in Figs. 2 - 6 are disposed in a matrix form, and images can be displayed. In the case of monochrome display, one display element makes one pixel.

In the image display panels shown in Figs. 2 - 6, for example, the color plate is made to be a white color in the case such that use is made of the particles having a black color as the particles, and the color plate is made to be a black color in the case such that use is made of the particles having a white color as the particles, so that a white/black image can be displayed. In the case such that an image having arbitrary colors are displayed instead of the white/black image, such image can be achieved by suitably selecting the combination of the particle color and the color plate. In the case of full color displaying, three groups of display elements, i.e., one group of display elements each having color plate of R (red), G (green) and B (blue) respectively and each having particles of black composes a set of disposed elements preferably resulting in the reversible image display panel having the sets of the elements.

Then, the liquid powders used instead of the particles will be explained.

As mentioned above, the liquid powder is an intermediate material having both of liquid properties and particle properties and exhibiting a self-fluidity without utilizing gas force and liquid force. The liquid powder becomes particularly an aerosol state, and thus, in the image display device according to the invention, it is utilized under such a condition that a solid material is floated in a gas as a dispersant in a relatively stable manner.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult. On the other hand, if the apparent volume in the maximum floating state is larger than 12 times, a handling inconvenience during a liquid powder filling operation into the device such as a particle over-scattering occurs. That is, it is measured by filling the liquid powder in a transparent closed vessel through which the liquid powder is seen; vibrating or dropping the vessel itself to obtain a maximum floating state; and measuring an apparent volume at that time from outside of the vessel. Specifically, the liquid powder having a volume 1/5 of the vessel is filled as the liquid powder in a vessel with a polypropylene cap having a diameter (inner diameter) of 6 cm and a height of 10 cm (product name I-boy® produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, in the image display device according to the invention, it is preferred that a time change of the apparent volume of the liquid powder satisfies the floating formula:

$$V_{10}/V_5>0.8;$$

here, $V_5$ indicates the apparent volume ($cm^3$) of the liquid powder after 5 minutes from the maximum floating state; and $V_{10}$ indicates the apparent volume ($cm^3$) of the liquid powder after 10 minutes from the maximum floating state. In this case, in the image display device according to the invention, it is preferred to set the time change $V_{10}/V_5$ of the apparent volume of the liquid powder to larger than 0.85, more preferably larger than 0.9, most preferably larger than 0.95. If the time change $V_{10}/V_5$ is not larger than 0.8, the liquid powder is substantially equal to normal particles, and thus it is not possible to maintain a high speed response and durability according to the invention.

Moreover, it is preferred that the average particle diameter (d(0.5)) of the particle materials constituting the liquid powder is 0.1 - 20 μm, more preferably 0.5 - 15 μm, most preferably 0.9 - 8 μm. If the average particle diameter (d(0.5)) is less than 0.1 μm, a display controlling becomes difficult. On the other hand, if the average particle diameter (d(0.5)) is larger than 20 μm, a display is possible, but opacifying power is decreased and thus a thin shape device is difficult. Here, the average particle diameter (d(0.5)) of the particle materials constituting the liquid powder is equal to d(0.5) in the following particle diameter distribution Span.

It is preferred that particle diameter distribution Span of the particle material constituting the liquid powder, which is defined by the following formula, is not more than 5 preferably not more than 3:

Particle diameter distribution Span = (d(0.9) - d(0.1))/d(0.5) ; here, d(0.5) means a value of the particle diameter expressed by μm wherein an amount of the particle material constituting the liquid powder having the particle diameter larger than this value is 50% and an amount of the particle material constituting the liquid powder having the particle diameter expressed by μm wherein an amount of the particle material constituting the liquid powder having a particle diameter smaller than this value is 10%, and d(0.9) means a value of the particle diameter expressed by μm wherein an amount of the particle material constituting the liquid powder having the particle diameter smaller than this value is 90%. If the particle diameter distribution Span of the particle materials constituting the liquid powder is set to not more than 5, the particle diameter becomes even and it is possible to perform an even liquid powder movement.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The liquid powder may be formed by mixing necessary resin, charge control agent, coloring agent, additive and so on and grinding them, or, by polymerizing from monomer, or, by coating a particle with resin, charge control agent, coloring agent, and additive and so on. Hereinafter, typical examples of resin, charge control agent, coloring agent, additive and so on constituting the liquid powder will be explained.

Typical examples of the resin include urethane resin, acrylic resin, polyester resin, acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers are preferably used.

Examples of the electric charge control agent include, positive charge control agent include the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of basic or acidic dye may be employable. Examples include Nigrosine, Methylene Blue, quinoline yellow, rose bengal and do on.

Examples of the inorganic additives include titanium oxide, Chinese white, zinc sulfide, antimonial oxide, calcium carbonate, zinc white, talc, silica, calcium silicate, alumina white, cadmium yellow, cadmium red, cadmium orange, titanium yellow, iron blue, ultramarine blue, cobalt blue, cobalt green, cobalt violet, ferric oxide, carbon black, copper powder, aluminum powder and so on.

However, if the above materials are only mixed or coated with no contrivance, the liquid powder exhibiting an aerosol state cannot be obtained. The regular method of forming the liquid powder exhibiting an aerosol state is not defined, but the following method is preferably used.

At first, inorganic fine particles having an average particle size of 20 - 100 nm preferably 20 - 80 nm are preferably fixed on a surface of materials constituting the liquid powder. Moreover, it is preferred to treat the inorganic fine particles by a silicone oil. Here, as for the inorganic fine particles, use may be made of silicone dioxide (silica), zinc oxide, aluminum oxide, magnesium oxide, cerium oxide, ferric oxide, copper oxide and so on. In this case, a method of fixing the inorganic fine particles is important. For example, use may be made of hybridizer (NARA-KIKAI Industry Co., Ltd.) or mechano-fusion (Hosokawa Micron Co., Ltd.), and the liquid powders showing an aerosol state are formed under a predetermined condition (for example processing time).

Here, in order to further improve a repeating durability, it is effective to control a stability of the resin constituting the liquid powder, especially, a water absorbing rate and a solvent insoluble rate. It is preferred that the water absorbing rate of the resin constituting the liquid powder sealed between the substrates is not more than 3 wt % especially not more than 2 wt %. In this case, a measurement of the water absorbing rate is performed according to ASTM-D570 and a measuring condition is 23°C for 24 hours. As for the solvent insoluble rate of the liquid powder, it is preferred that a solvent insoluble rate of the liquid powder, which is defined by the following formula, is not less than 50% more preferably not less than 70%:

$$\text{solvent insoluble rate (\%)} = (B/A) \times 100;$$

(here, A is a weight of the liquid powder before being immersed into the solvent and B is a weight of resin components after the liquid powder is immersed into good solvent at 25°C for 24 hours).

If the solvent insoluble rate is less than 50%, a bleed is generated on a surface of the particle material constituting the liquid powder when maintaining for a long time. In this case, it affects an adhesion power with the liquid powder and prevents a movement of the liquid powder. Therefore, there is a case such that it affects a durability of the image display. Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

As for a filling amount of the liquid powder, it is preferred to control an occupied volume (volume occupied rate) of the liquid powder to 5 - 85 vol %, more preferably 5 - 65 vol %, most preferably 10 - 55 vol % of a space between the opposed substrates. Since the liquid powder exhibits an aerosol state, it is difficult to use a normal filling method for filling the liquid powder in the display device. In this case, it is preferred to use an electrostatic plating apparatus and to adhere the liquid powder to the substrate by force so as to perform an easy handling. In addition, the liquid powder may be adhered to one of the substrates or may be adhered to both of the substrates, and then the substrates are connected.

Further, in the present invention, it is important to control a gas in a gap surrounding the particles or the liquid powders between the substrates, and a suitable gas control contributes an improvement of display stability. Specifically, it is important to control a humidity of the gap gas to not more than 60% RH at 25°C, preferably not more than 50% RH, more preferably not more than 35% RH. The above gap means a gas portion surrounding the particles or the liquid powders obtained by substituting an occupied portion of the particles or the liquid powder 15, an occupied portion of the partition walls 16 and a seal portion of the device from the space between the transparent substrate 11 and the opposed substrate 12 for example in Figs. 2a - 2c.

A kind of the gap gas is not limited if it has the humidity mentioned above, but it is preferred to use dry air, dry nitrogen gas, dry helium gas, dry carbon dioxide gas, dry methane gas and so on. It is necessary to seal this gas in the device so as to maintain the humidity mentioned above. For example, it is important to perform the operations of filling the liquid powder and assembling the substrate under an atmosphere having a predetermined humidity and to apply a seal member and a seal method for preventing a humidity inclusion from outside of the device. Moreover, the gap portion may be a pressure reducing state such as $10^5$ - $10^{-4}$ Pa.

<Explanation of the first aspect of the invention>

Then, in the image display device according to the first aspect of the invention, an example of actual image display using the chargeable particles ① mentioned above and an example of actual image display using the chargeable particles ② mentioned above will be explained.

[Image display panel using the chargeable particles ① mentioned above]

The image display device having a display element with a structure shown in Fig. 2 was prepared. A glass substrate (thickness: 2 mm) was employed as the transparent substrate and the opposed substrate. The display electrode was made of ITO electrode and the opposed electrode was made of copper electrode. In this case, on the surfaces of respective electrodes, an insulating silicone resin was coated with the thickness about 3 μm for the purpose of preventing an adhesion and a charge leakage. Black toners (spherical toners with average particle diameter of 8 μm, surface charge density of -40 μC/m², the surface potential of 450 V at 0.3 second after the foregoing surface potential measurement) for electro-photography were employed as the negatively chargeable particles. The height of the partition wall (distance between substrates) was set to 200

μm and the filling amount of the negatively chargeable particles was set to 30 % of the space volume. The space surrounded by the partition walls was 300 μm × 300 μm × 200 μm (distance between substrates). Use was made of a resin plate having a white color as the color plate.

When DC voltage of 200 V was applied in such a manner that a side of the display electrode was a high potential and a side of the opposed electrode was a low potential, the negatively chargeable particles were moved towards the display electrode and adhered, so that a black color was displayed on the image display element. Then, if the applied voltage was inversed, the negatively chargeable particles were moved towards the opposed electrode and adhered, so that a white color was displayed on the image display element.

The response time for the applied voltage was measured to be 1 msec. Even after leaving the display device cutting off the applied voltage for one day, each display was maintained.

Further, although the polarity of the applied voltage was reversed repeatedly for 100,000 times, there was almost no variation of the response rate.

[Image display panel using the chargeable particles ② mentioned above]

The image display device having a display element with a structure shown in Fig. 5 was prepared. A glass substrate (thickness: 2 mm) was employed as the transparent substrate and an epoxy substrate (thickness: 3 mm) was employed as the opposed substrate. The display electrode and the opposed electrode were made of copper electrode. In this case, on the surfaces of respective electrodes, an insulating silicone resin was coated with the thickness about 3 μm for the purpose of preventing an adhesion and a charge leakage. Black toners (spherical toners with average particle diameter of 8 μm, surface charge density of -50 $\mu C/m^2$, the surface potential of 450 V at 0.3 second after the foregoing surface potential measurement) for electro-photography were employed as the negatively chargeable particles. Polymerized particles of styrene-acrylic resin (spherical toners with average particle diameter of 8 μm, surface charge density of +45 $\mu C/m^2$, the surface potential of 500 V at 0.3 second after the foregoing surface potential measurement) produced by using titanium oxide as the white pigment and ammonium salt compound of fourth grade as the electric charge control agent were employed as the positively chargeable particles. For the purpose of charging the particles, an equivalent amount of both particles were mixed and agitated and frictional charging was conducted. The height of the partition wall (distance between substrates) was set to 200 μm, and the filling amount of the negatively chargeable particles and the positively chargeable particles among the space between the substrates was adjusted to 70 %. The space surrounded by the partition walls was 300 μm × 300 μm × 200 μm (distance between substrates).

When DC voltage of 200 V was applied in such a manner that a side of the display electrode was a high potential and a side of the opposed electrode was a low potential, the negatively chargeable particles were moved towards the display electrode and adhered, so that a white color was displayed on the image display element. Then, if the applied voltage was inversed, the positively chargeable particles were moved towards the display electrode and adhered, so that a black color was displayed on the image display element.

The response time for the applied voltage was measured to be 1 msec. Even after leaving the display device cutting off the applied voltage for one day, each display was maintained.

Further, although the polarity of the applied voltage was reversed repeatedly for 100,000 times, there was almost no variation of the response rate.

Then, a structure and an assembling state of the linear illuminant 3 used as the light emission means of the image display device according to the first aspect of the invention shown in Fig. 1 will be explained with reference to Figs. 8 - 16.

Figs. 8 - 12 are schematic views respectively showing an actual example of the linear illuminant, in which: Fig. 8 is a perspective view; Fig. 9 is a cross sectional view along IX-IX line in Fig. 8; Fig. 10 is a perspective view of the light transmission tube; Fig. 11 is a cross sectional view along XI-XI line in Fig. 10; and Fig. 12 is a cross sectional view along XII-XII line in Fig. 11. Figs. 13 - 15 are plan views respectively illustrating the assembling state of the light transmission tube, and Fig. 16 is a cross sectional view along XVI-XVI line in Fig. 15.

In the linear illuminants shown in Figs. 8 - 12, a light source unit 31 is arranged to one end surface of a light transmission tube 30. In addition, a reflection-layer is arranged to the other end surface of the light transmission tube according to need so as to prevent unnecessary light leakage.

A light emitting diode is provided in the light source unit 31. One or one kind of the light emitting diode may be provided, but, in this embodiment, three light emitting diodes 32, 33, 34 having red color, blue color, yellow color respectively are arranged in such a manner that they are opposed to an end surface of the light transmission tube 30.

In the light transmission tube 30, a stripe-shaped reflection-layer 37 is formed between a core 35 and a tubular clad 36 covering the core 35 in such a manner that it extends in a longitudinal direction of the tube. In this case, the reflection-layer 37 may be formed under a state such that it is slightly intruded in the core 35 from its surface.

The reflection-layer 37 is provided to a side opposed to a side of the light transmission tube 30 to which a light is to be emitted. In this embodiment, the reflection-layer 37 has a width of about half round of the core 35 of the light emission tube 30, and a light is hardly leaked from a side of the reflection-layer 37.

As a material constituting the core 35 (core material), use is made of a highly transparent material having a refraction factor larger than the material constituting the tubular clad 36 (clad material). Normally, plastics, elastomer and so on are suitably selected in accordance with its purpose and used.

As the actual examples of core material, use is made of transparent materials such as polystyrene, styrene, methyl methacrylate copolymer, (meta) acrylate resin, polymethyl pentene, allylglycol carbonate resin, spiran resin, amorphous polyolefin, polycarbonate, polyamide, polyallylate, polysulfone, polyallyl sulfone, polyether supfone, polyetherimide, polyimide, diallyl phthalate, fluorocarbon resin, polyester carbonate, norbornene resin (ARTON), alicyclic acrylate resin (Optretz), silicone resin, acrylic rubber, silicone rubber and so on (it should be noted that "(meta) acrylate" means "acrylate and methacrylate").

In addition, the clad materials may be selected among transparent materials having a low refraction factor, and use is made of organic materials such as plastics, elastomer and so on.

As the actual examples of clad materials, use is made of polyethylene, polypropylene, polymethyl methacrylate, polymethyl metacrylate fluoride, polyvinyl chloride, polyvinylidene chloride, polyvinyl acetate, polyethylene-vinyl acetate copolymer, polyvinyl alcohol, polyethelene-polyvinyl alcohol copolymer, fluorocarbon resin, silicone resin, natural rubber, polyisoprene rubber, polybutadiene rubber, styrene-butadiene copolymer, butyl rubber, butyl halide rubber, chloroprene rubber, acrylic rubber, ethylene-propylene-diene copolymer (EPDM), acrylic nitrile-butadiene copolymer, fluorocarbon rubber, silicone rubber and so on.

Among the core materials and the clad materials mentioned above, from the viewpoint of optical properties such as transparency, refraction factor and so on and workability of simultaneous extrusion, it is preferred to use polystyrene, polycarbonate, styrene-(meta) acrylate copolymer (MS polymer) and so on as the core material and to use (meta) acrylic polymer and so on as the clad material.

It is preferred to form the reflection-layer by (meta) acrylic polymer including white pigment and scattering material.

Here, as the white pigments and the scattering materials, use is made of organic polymer particles such as silicone resin particles, polystyrene resin particles and so on; metal oxide particles such as $Al_2O_3$, $TiO_2$, $SiO_2$ and so on; sulfate particles such as $BaSO_4$ and so on; and carbonate particles such as $CaCO_3$ and so on. In this case, it is possible to use these materials by one material solely or by a combination of two or more materials.

If reflection efficiency and the workability of simultaneous extrusion are considered, it is preferred to control an average particle diameter of the particles of the white pigments or the scattering materials to a range of 0.1 - 200 μm more preferably 0.5 - 50 μm. Moreover, it is preferred to control an amount of the particles in a material constituting the reflection-layer (reflection material) to a range of 0.5 - 20 wt% more preferably 1 - 10 wt %.

A thickness of the reflection-layer 37 is not particularly restricted, but it is preferred to control the thickness to 10 - 200 μm more preferably 50 - 100 μm. If this thickness is too thin, a light to be reflected is decreased and the brightness becomes low. If this thickness is too thick, a light to be reflected is increased and the brightness becomes high. However, these phenomena are recognized only near the light source, and the brightness becomes low sometimes in a region apart from the light source.

A diameter of the core 35 is not particularly restricted, but normally it is controlled to a range of 2 - 30 mm preferably 5 - 15 mm. Moreover, a radial thickness of the tubular clad 36 is normally controlled to a range of 0.05 - 4 mm preferably 0.2 - 2 mm.

In the light emission tube, a reflexivity protect layer may be formed on an outer surface of the tubular clad 36 so as to cover a circumferential surface at which a light is not emitted (circumferential surface at a side of the reflection-layer 37). In the light emission tube having the reflexivity protect layer, even if a defect such as pin holes and so on are existent in the reflection-layer 37, the reflexivity protect layer functions to reflect a light leaked to a rear side of the reflection-layer 37 through the defect portion or a light leaked from a side portion of the reflection-layer 37, and thus it is possible to reduce a light loss, so that the brightness at a reversed side of the reflection-layer 37 can be made higher.

As a material constituting the reflexivity protect layer, it is preferred to use the material in which a light leaked from the reflection-layer 37 is not transmitted outward and in which the leaked light is not absorbed and is effectively reflected. As an actual example, use is made of metal foils or metal sheets such as silver, aluminum and so on, coating films in which the scattering particles for scattering a light as mentioned above are scattered, and so on.

In order to produce the light transmission tube mentioned above, the core material, the clad material, and the reflection material including white pigments and scattering material are introduced to a tri-axial extruder having three screw portions, and the simultaneous extrusion is performed in such a manner that the core material becomes a cylindrical shape, the reflection material is arranged on an outer surface of the cylindrical core material in plural stripe shapes, and the clad material becomes a tubular shape covering the core material and the reflection material mentioned above.

By using this method mentioned above, it is possible to extrude simultaneously three kinds of materials having different refraction factors and different physical properties and to form a lamination member having three kinds of functions at the same time. In this case, since the lamination is performed by a rapid forming rate in such a manner that respective materials maintain their softening states, it is possible to manufacture effectively the light transmission tube having excellent contacting properties between respective layers.

In the case of forming the reflexivity protect layer, use is made of a method such that a metal foil or a metal sheet is adhered after the extrusion mentioned above, or, a method such that a coating material in which the scattering particles are scattered is coated. In addition, it is possible to form the reflexivity protect layer by utilizing the simultaneous extrusion.

Moreover, the light transmission tube may be formed by another manufacturing method except for the methods mentioned above.

It is possible to emit a light having various colors from the light transmission tube 30 by lighting one, two or three of the light emission diodes 32, 33, 34 mentioned above. When one of the light emission diodes 32, 33, 34 in the light source unit 31 is lighted on, a light having a mixed intermediate color is emitted, and when three diodes are lighted on simultaneously a light having a white color can be emitted.

It should be noted that one or one kind of light emission diode is utilized as mentioned above.

In Fig. 1, the linear illuminant 3 is arranged along one end of the image display panel 2, but the linear illuminant may be arranged along opposed two ends of the image display panel 2 and also along three or four ends thereof.

In this case, as shown in Fig. 13, the following construction may be used. That it, the light source unit 31 is arranged to one end of the light transmission tube 30, a light emitted from the other end of the light transmission tube 30 is reflected by a reflector 38a and is introduced to one end of a light transmission tube 30A, and a light emitted from the other end of the light transmission tube 30A is reflected by a reflector 38b and is introduced to one end of a light transmission tube 30B. A reflection-layer 38 is arranged to the other end of the light transmission tube 30B. A light introduced to one end of respective transmission tubes 30, 30A and 30B is emitted from a side surface of the light transmission tubes 30, 30A and 30B.

Moreover, as shown in Fig. 14, the light transmission tube 30 having the light source unit 31 at its end may be arranged to respective ends of the image display panel 2 independently. As is the same as the embodiment shown in Fig. 13, the transmission tube 30 may be arranged to only three ends of the image display panel 2.

Further, as shown in Fig. 15, a continuous long light transmission tube 30C may be arranged around respective ends of the image display panel 2. The light source unit 31 is arranged to one end of the light transmission tube 30C and the reflection-layer 38 is arranged to the other end. In this case, as shown in Fig. 16, a whole outer surface of the light transmission tube 30C is covered by a reflection-layer 39 at a bending portion thereof corresponding to a corner portion of the image display panel 2, and thus it is possible to prevent an excessive bright lighting at the corner portion of the image display panel 2 and a light leakage due to the bending of the light transmission tube.

The reflection-layers 38 and 39 are formed by adhering a metal foil such as aluminum and so on thereto or by coating a paste including metal particles made of aluminum and so on.

Moreover, in the image display device according to the invention, in addition to the linear illuminant as the light emission means, the light emission means may comprise a light guide plate arranged at a front surface of the light display surface of the image display means, and a light emitted from the linear illuminant to a side surface or a rear surface of the light guide plate is reflected by the light guide plate and is emitted to the image display surface.

Then, a construction of the image display device according to the invention having the light guide plate will be explained with reference to Figs. 17 - 21.

In the image display device shown in Figs. 17 - 21, light guide plates 41 - 45 are arranged and opposed to the image display surface of the image display panel 2, and the linear illuminant 3 is arranged to one side surface of the light guide plates 41 - 45. In all the image display devices, a light emitted from the linear illuminant 3 is reflected by the light guide plates 41 - 45 and is introduced to the image display surface of the image display panel 2.

In the light guide plate 41 of the image display device shown in Fig. 17, a surface 41B opposed to the image display panel 2 (hereinafter, the surface opposed to the image display panel 2 is described as "rear surface" and its reverse side surface is described as "front surface" sometimes) is a satin finished surface. By arranging the satin finished surface in this manner, it is possible to reflect a light from the linear illuminant 3 introduced from a side surface of the light guide plate 41 and to introduce the reflected light to the image display surface of the image display panel 2.

In the light guide plate 42 of the image display device shown in Fig. 18, the light guide plate 42 has a wedge shape cross section in such a manner that a thickness is gradually thin from a side surface to which the linear illuminant 3 is arranged to an opposed side surface, and a front surface 42A is inclined while a rear surface 42B is flat. Then, a light from the light illuminant 3 introduced from a side surface of the light guide plate 42 is reflected by the inclined front surface, and the reflected light is introduced to the image display surface of the image display panel 2.

In the light guide plate 43 of the image display device shown in Fig. 19, the light guide plate 43 has a shape such that a front surface 43A is a prism surface having a triangular wave cross section or a tooth shape cross section and a rear surface 43B is flat. Also in the image display device mentioned above, a light from the light illuminant 3 introduced from a side surface of the light guide plate 43 is reflected by the prism surface of the front surface 43A, and a light emitted from the rear surface 43B is introduced to the image display surface of the image display panel 2.

In the image guide plates 41 - 43 shown in Figs. 17 - 19, use is made of a transparent synthetic resin such as acrylic resin (PMMA), polycarbonate, polystyrene, polynorbonene, 4-methylpenetene-1 resin, acrylic nitrilesthyrene resin, cyclic polyolefin and so on. As the formation method of these materials, use is made of injection molding method, extrusion method, casting method and so on. A thickness thereof is normally a range of 0.1 - 2 mm.

A light guide plate 44 of the image display device shown in Fig. 20 is constructed by a light scattering plate having a construction such that transparent fine particles having a refraction factor other than that of a base transparent resin (hereinafter, described as "light scattering particles" sometimes) are scattered in the base transparent resin.

As for the transparent resin as a matrix, use is made of acrylic resin (PMMA), polycarbonate, polystyrene, polynorbonene, 4-methylpenetene-1 resin, acrylic nitrilesthyrene resin, cyclic polyolefin and so on.

As the light scattering particles, it is necessary to have a refraction factor different from that of the transparent resin mentioned above, and thus an excellent light scattering property can be achieved. In this case, the refraction factor of the light scattering particles is preferred to be larger or smaller by 0.01 - 0.5 more preferably 0.02 - 0.2 with respect to that of the transparent resin to be used.

As the light scattering particles, use is made of inorganic fine powder such as glass fiber, glass beads, talc, silica, alumina, magnesia, Chinese white, calcium carbonate, barium sulfate, titanium white, aluminum hydroxide, mica, feldspar powder, quartz powder and so on, or organic fine powder such as silicone resin, fluorocarbon resin, epoxy resin, styrene bridging resin and so on. It is possible to use them by one kind solely or by a combination of two or more kinds. From the viewpoint of transparency, it is preferred to use silicone resin.

It should be noted that an average particle diameter of the light scattering particles is preferably in a range of 0.2 - 10 μm more preferably 0.2 - 5 μm.

An amount of the light scattering particles is preferably in a range of 0.01 - 0.8 parts by weight more preferably 0.02 - 0.4 parts by weight with respect to 100 parts by weight of the transparent resin. If this amount is not larger than 0.01 parts by weight, an excellent light scattering effect cannot be obtained, and if this amount is not smaller than 0.8 parts by weight, an even light emission cannot be obtained.

In the case of using the light scattering plate mentioned above, the light scattering plate may be a flat panel having an even thickness as shown in Fig. 20. Moreover, the light scattering plate may be a wedge shape cross section as the light guide plate 42 shown in Fig. 18, and may be a prism shape as the light guide plate 43 shown in Fig. 19.

Also in the image display device mentioned above, a light from the linear illuminant 3 introduced from a side surface of the light guide plate 44 is scattered by the light scattering particles of the light guide plate 44, and the scattered light emitted from the rear surface is introduced to the image display surface of the image display panel 2.

In a light guide plate 45 of the image display device shown in Fig. 21, a dotted or linear reflection-layer for reflecting a light toward the image display surface is arranged to the substrate, and a dark color-layer is arranged to a view surface (a side of front surface) of the reflection-layer. Also in this embodiment, a light from the linear illuminant 3 introduced from a side surface of the light guide plate 45 is reflected by the reflection-layer, and the reflected light emitted from the rear surface of the light guide plate 45 is introduced to the image display surface of the image display panel 2.

In the light guide plate 45, it is possible to arbitrary control a light amount distribution emitted from the light guide plate by varying the arrangement or the size of the reflection-layer, and thus it is possible to easily design the light guide plate having an even light amount distribution emitted from the rear surface. Moreover, since the dark color-layer is arranged, a light reflection amount of a light, which is contacted to the front surface, can be decreased.

Hereinafter, a construction of the light guide plate 45 used in the image display device shown in Fig. 21 will be explained with reference to Fig. 22. Fig. 22 shows an enlarged cross sectional view of the light guide plate 45, and a depression portion 52 is arranged to the front surface of a substrate 51. A reflection-layer 53 and a dark color-layer 54 are arranged to the depression portion 52. The reflection-layer 53 is arranged to an inner portion of the depression portion 52, and the dark color-layer 54 is arrange to an inlet side of the depression portion 52 and has the same front surface as that of the substrate 51.

In the light guide plate 45 mentioned above, a light from the linear illuminant 3 introduced from a side surface of the substrate 51 is reflected by the reflection-layer 53, and the reflected light emitted from the rear surface of the substrate 51 is introduced to the image display surface of the image display panel 2.

In this manner, if use is made of the light guide plate having the reflection-layer and the dark color-layer in the depression portion, the front surface of the substrate becomes flat, and thus the reflection-layer and the dark color-layer formed by ink or coating material mentioned below are difficult to be peeled off, so that a durability can be improved.

In this case, a part of the reflection-layer may be inserted into the depression portion, and the all reflection-layer and a part of the dark color-layer may be inserted into the depression portion. For the purpose of obtaining the peel-off prevention effect mentioned above, it is preferred to arrange the all reflection-layer and the all dark color-layer into the depression portion and to make the front surface flat. The dark color-layer may be arranged as a depression state in the depression portion.

The depression portion may be formed by a depression hole shape or may be formed by a depression recess shape. In the case of the depression hole shape, a number of the depression portions are formed on the substrate surface in a dotted manner. Moreover, in the case of the depression recess shape, the depression portions are formed on the substrate surface with a predetermined pitch (this pitch may be varied partially).

As a cross sectional shape (viewed at a cross section along a surface perpendicular to the surface of the substrate) of the depression portion, use is made of a half circular cross section (including a half eclipse shape), a trapezoidal cross section, a triangular cross section and so on other than the rectangular shape as shown in Fig. 2, but the other cross sectional shape may be applied.

As the cross sectional shape of the depression portion, it is preferred to be narrower toward a bottom. Specifically, in the case of the depression hole shape, cone shape, pyramid shape, half circular shape, watch glass shape, trapezoidal hole shape and so on.

In the case of using the depression hole which is narrower toward its bottom, it is possible to make an area of the dark color-layer larger than that of the reflection-layer on a projection plane with respect to the panel surface of the substrate, and thus it is possible to sufficiently obtain a shield effect of the reflection light by the dark color-layer, so that a visibility of the image display surface can be improved. Moreover, in the case that a light is introduced from a side surface of the substrate, since a light from the linear illuminant is reflected by a side surface of the depression portion of the substrate toward a side of the rear surface of the substrate, and thus it is possible to increase a light amount emitted to the image display surface. Therefore, it is effective.

The light transmission plate having the reflection-layer and the dark color-layer in the depression portion of the substrate can be formed as follows.

At first, the depression portion is formed on the planar substrate by grinding or etching and so on, or, the substrate having the depression portion formed at the injection molding of the substrate is prepared. Then, the reflection-layer is formed in the depression portion of the substrate by using ink or coating material, and the dark color-layer is formed thereon in the same manner. Finally, the overall surface of the substrate is wiped by a cloth or a surface layer is sliced thinly, so that the ink and the coating material adhered to a portion other than the depression portion can be eliminate.

As a material of the substrate, use is made of a transparent resin such as acrylic, polyvinyl chloride, polycarbonate, silicone resin and so on, a transparent film such as PET, polyethylene, polyvinyl chloride and so on. A thickness thereof is preferably in a range of 30 - 2000 μm.

The reflection-layer can be formed by scattering the white pigment such as titanium oxide, silica, alumina and so on in a resin solvent. The dark color-layer can be formed by scattering black particles made of for example carbon black in the resin solvent.

In this manner, the light guide plate having the reflection-layer and the dark color-layer to the substrate can be achieved only if the dark color-layer is arranged to a view surface of the reflection-layer, and thus the construction is not restricted to Fig. 22.

That is to say, the reflection-layer may be arranged at a side of the front surface of the substrate as shown in Fig. 22, and may be arranged at a side of the rear surface. In the case that the reflection-layer is arranged to the front surface of the substrate, the dark color-layer provided to the view surface of the reflection-layer, preferably a black color-layer, is arranged in such a manner that it covers a side of the front surface of the reflection-layer. Moreover, in the case that the reflection-layer is arranged to the rear surface of the substrate, the dark color-layer is arranged between the reflection-layer and the substrate. The reflection-layer is not restricted to the embodiment such that it is arranged in the depression portion of the substrate, and the reflection-layer may be arranged on the substrate surface. That is to say, the reflection-layer may be formed on a plane surface at a side of the front surface of the substrate for example, and the dark color-layer may be formed on the reflection-layer. Moreover, the reflection-layer may be formed through the dark color-layer on the plane surface at a side of the rear surface of the substrate. In the case that a thickness of the reflection-layer and a thickness of the dark color-layer are thin, it is preferred to use the construction in which the reflection-layer and the dark color-layer are formed on the substrate, since it is not necessary to form the depression portion to the substrate. On the other hand, it is preferred to use the construction in which the reflection-layer and the dark color-layer are formed in the depression portion, since there is no drawback on a projection of the reflection-layer and the dark color-layer.

The reflection-layer can be formed by a vaporizing of metal except for the ink or the coating material in accordance with its arrangement.

The substrate may be a transparent substrate or may be a lamination substrate having a transparent layer at its front surface and a light scattering layer including the light scattering particles mentioned above at its rear surface. In the case of using the lamination substrate, a light incident upon the substrate is scattered by the light scattering layer and is reflected by the reflection-layer, and the reflected light is emitted from the rear surface of the substrate or the scattered light is directly emitted from the rear surface of the substrate. Therefore, it is possible to increase a light amount emitted from the rear surface. Moreover, the substrate may be a light scattering substrate constructed only by the light scattering layer mentioned above.

In the light guide plate mentioned above, if an arranging density of the reflection-layer is made larger in accordance with a distance from the linear illuminant, it is possible to make a light amount distribution from the rear surface even. For example, in the case that the linear illuminant is arranged to one side surface of the substrate having a square shape, the arranging density of the reflection-layer is made larger when the distance from the side surface becomes longer. In the case that the linear illuminant is arranged to the opposed two side surfaces of the square substrate, the arranging density of the reflection-layer is made larger when the distance from the two side surfaces are longer, and the arranging density is made largest at an intermediate portion between two side surfaces.

In the light guide plate, the substrate, to which the reflection-layer and the dark color-layer are arranged, may be made of a film, and the film may be sealed in the transparent resin.

Also in the light guide plates 41 - 45 shown in Figs. 17 - 22, a protection film may be arranged to a side of the front surface. Particularly, in the light guide plate in which the reflection-layer and the dark color-layer are arranged to a side of the front surface of the substrate as shown in Fig. 22, it is possible to improve a durability by arranging the protection film mentioned above.

As the embodiments arranging the light guide plate, the explanation is made to the example in which the linear illuminant is arranged to one side surface of the light guide plate in Figs. 17 - 21, but the linear illuminant may be arranged to the opposed two side surfaces, or three or four side surfaces of the light guide plate. Moreover, the linear illuminant may be arranged to a side portion of the rear surface of the light guide plate except to a side surface of the light guide plate, and a light from the linear illuminant may be emitted from a side of the rear surface of the light guide plate.

In the case that the linear illuminant is arranged only to one side surface of the light guide plate, if the light guide plate has the wedge shape cross section in which the thickness thereof is gradually thinner in accordance with the distance from the linear illuminant, it is possible to emit an even light to the image display surface of the image display panel, and it is preferred. In the case that the linear illuminant is arranged to the opposed two side surfaces of the light guide plate, the light guide plate may have a wedge shape cross section at its both ends in which the thickness thereof is gradually thinner from the opposed two side surfaces to the intermediate portion of the light guide plate, from the same reasons.

In the present invention, if all the image display panel, the light transmission tube of the linear illuminant and the light guide plate are formed by a flexible material, an application for an electric paper and so on can be achieved. In this case, it is preferred that use is made of the following materials for respective members and a necessary flexibility is obtained.

Substrate material of image display panel: PET, acrylic resin, silicone resin etc.

Light transmission tube: fluorocarbon resin as clad material, silicone resin as core material etc.

Light guide plate: silicone resin, acrylic resin, acrylic rubber etc.

Also in the image display device according to the invention, the image display surface may be arranged to both surfaces of the image display panel. In the case that the image display surface is arranged to the both surfaces, the image display panels as shown in Figs. 2 - 6 may be adhered with each other in such a manner that the image display surface is existent at an outer side. Moreover, if use is made of the image display panel as shown in Fig. 6 in which the image display is performed by adhering the negatively chargeable particles to one substrate and the positively chargeable particles to the other substrate, the both surface display can be performed by one image display panel (here, colors to be displayed are different on front and rear surfaces, and it is necessary to use the transparent substrate and the transparent electrode).

In the image display panel having the both surface display mentioned above, the light emitting means may be arranged in such a manner that a light is emitted to both image display surfaces and may be arranged in such a manner that a light is emitted to one display surface.

Then, as a preferred embodiment of the image display device according to the first aspect of the invention mentioned above, an example in which the V-recess is arranged to the light guide plate will be explained.

Figs. 23a and 23b are a side view and a perspective view respectively showing one preferred embodiment of the image display device according to the first aspect of the invention. In the embodiment shown in Figs. 23a and 23b, the image display device 101 according to the invention comprises: an image display panel 102 as the image display means for displaying the image by moving the chargeable particles between the electrodes to which a voltage is applied; and a light emitting means 106 for emitting a light to the image display panel 102 and an image display surface 103, having a linear illuminant 104 extending along one end of the image display panel and a light guide plate 105 arranged to the front surface of the image display surface 103 of the image display plate 102, wherein a light emitted from the linear illuminant 104 to the side surface or the rear surface of the image guide plate 105 is reflected by the light guide plate 105 and is introduced to the image display surface 103. The above construction is the same as that of the known image display device.

Features of the preferred embodiment of the image display device according to the first aspect of the invention are that a number of V-recesses 107 each having a prism surface 107a used for reflecting a light emitted from the linear illuminant 104 to the image display surface 103 is arranged to a surface of the light guide plate 105 (here, a surface reversed to a surface opposed to the image display surface 103), and a V-recess angle α is set to 25° - 40°, as shown in Fig. 24 by a part of the light guide plate 105 constituting the image display device according to the invention. In this case, the V-recess angle α is defined by an angle of the prism surface 107a of the V-recess 107 with respect to a surface parallel to the image display surface 103 of the image display panel 102, as shown in Fig. 25 by an enlarged figure of a part of light guide plate 105. In the image display device 101 according to the invention, if the V-recess angle α is limited to 25° - 40° in this manner, it is possible to increase the refraction factor of light in the transparent light guide plate 105 and to effectively emit a light with respect to the image display surface 103. In this case, it is preferred to set the V-recess angle α to 25° - 35°. Moreover, a numeral 104a is a reflection plate surrounding the linear illuminant 104.

Then, in the image display device 101 according to the invention, a function and an effect of the example in which the V-recess angle α is limited to 25° - 40° will be explained in detail in comparison with a case of the liquid crystal display.

Fig. 26 is a graph showing a variation of reflection coefficient of respective image display devices when an angle of an incident light to the image display device is varied from 15° to 85°. In the embodiment shown in Fig. 26, a measurement is performed to an example in which 5 sheets of recycle paper are arranged as a standard example in which the reflection coefficient is high together with the image display device according to the invention and the liquid crystal display. The results shown in Fig. 26 are measured by using an incident angle dependency measuring apparatus of the reflection coefficient shown in Fig. 27. In Fig. 27, a numeral 108 is a reflection coefficient measuring apparatus; a numeral 109 is a light source; and a numeral 110 is the image display device in which no lighting means is arranged. Since the reflection coefficient measuring apparatus 108 is arranged in 0° direction and thus it is not possible to perform the measurement from 0° to 15°, the reflection coefficients in the results of Fig. 26 are measured by assuming that the reflection coefficient at 15° is 100.

Fig. 28 is a graph showing a relation between the V-recess angle α and an efficiency of the light guide plate when an incident angle from the linear illuminant to the light guide plate is varied. It is preferred that a light angle distribution emitted from the linear illuminant is concentrated at near 0°. However, as shown in Fig. 29, an angle distribution of the light source is wide and thus an angle distribution of the linear illuminant is also wide. Since a light having a wide angle distribution among them is not introduced to a side of the display and is introduced to a side of the viewer, some problems occur such that a light efficiency emitted to the display is decreased and such that a visibility is decreased. However, in the case that a design is performed under limited space and cost such as an auxiliary light source of the display, it is impossible to control a light of the linear illuminant completely. Therefore, although the efficiency is low, use is made of the linear illuminant having a wide distribution.

Particularly, since, as shown in Fig. 26, the liquid crystal display has a property such that the reflection coefficient is high only in a region such that the incident angle is low (a light is introduced in a substantially vertical direction with respect to the display surface), it is necessary to set the V-recess angle of the light guide plate to near 45° so as to emit a light at near 0°. In this case, as shown in Fig. 28, the efficiency is low in such a manner that the efficiency is 60 % when the incident angle to the light guide plate is 9° and the efficiency is decreased to 30 % when the incident angle is 18°. However, in the image display device according to the invention, since the reflection coefficient is not decreased as shown in Fig. 26 if the incident angle is set to a high level (a light is introduced in a substantially parallel direction with respect to the display surface), it is possible to set the V-recess angle α under 40°. The efficiency of the light guide plate at the V-recess angle of 40° is 100 % at the incident angle of 9° and also 68 % at the incident angle of 18°, and thus it is understood that the efficiency is remarkably improved as compared with the light guide plate having the V-recess angle of 45°. In this case, if the V-recess angle α can be set to 25° - 40° as the image display device, it is possible to eliminate the drawbacks on the efficiency decrease due to a large V-recess angle and on the decrease of visibility due to the leaked light, and thus its effects are large. Therefore, it is possible to apply to a printed matter.

Then, a visibility angle dependency of the reflection coefficient will be explained. The visibility angle is measured by using a visibility angle characteristic measuring apparatus of the reflection coefficient shown in Fig. 30 (a construction is the same as that of the incident angle dependency measuring apparatus shown in 5, and thus the same numerals are used here) in such a manner that the reflection coefficient measuring apparatus 108 is mover under a condition such that the light source is fixed at an angle of 20° as shown in the figure. The angle dependency of the reflection coefficient, in the case that the measured reflection coefficients are converted by assuming that the reflection coefficient at 0° is 1, is shown in Fig. 31. In the display, it is normally described by a symmetrical chevron shape having a maximum value at 0°. Here, only + direction is shown. From the results of Fig. 31, it is understood that it is preferred to make the visibility angle at a white color displaying over 40° at one side by a half bandwidth. That is, the half bandwidth means an angle range showing 50 % with respect to the maximum value of the reflection coefficient, and it is understood from Fig. 31 that the liquid crystal display has a half bandwidth of 38° and the image display device according to the invention has a half bandwidth of 79°.

Hereinafter, the present invention will be explained specifically by showing examples and comparative examples in the preferred embodiments of the image display device according to the first aspect of the invention explained with reference to Figs. 23 - 31. However, the present invention is not limited to the following examples.

Example 1

The image display device having the construction shown in Figs. 23 and 24 including the following linear illuminant, light guide plate and image display panel was manufactured.

[Linear illuminant]

The linear illuminant having the angle distribution shown in Fig. 29 was manufactured. The linear illuminant had a three layers construction having a diameter of 2 mm such that core, clad and reflection-layer are arranged orderly from its center and white LED's were arranged at its both ends.

[Light guide plate]

The light guide plate having the construction shown in Fig. 24 and the V-recess angle of 40° (material: ARTON by JSR company) was manufactured. The plan dimension was 70 × 70 mm, the thickness was 1.0 mm at a portion other than the V-recess portion and 1.0 → 0.8 mm (wedge shape) at the V-recess portion. AR (Anti Reflection) treatment was subjected to a surface to which the V-recess was not arranged. The pitch of the V-recess was 175 μm.

[Image display panel using the chargeable particles ① mentioned above]

The image display panel having the display element shown in Fig. 2 was manufactured. As the transparent substrate and the opposed substrate, use was made of the glass substrate (thickness: 2 mm), and the display electrode was formed by the ITO electrode and the opposed electrode was formed by the copper electrode. In order to prevent the particle adhesion on the surface of the electrode and to prevent the charge leakage, the silicone resin having the insulation property was coated with the thickness of about 3 μm. As the silicone resin, use was made of the positively chargeable one. Black toners (spherical toners with average particle diameter of 8 μm, surface charge density of -40 $\mu C/m^2$, the surface potential of 450 V at 0.3 second after the foregoing surface potential measurement) for electro-photography were employed as the negatively chargeable particles. The height of the partition wall (a distance between electrodes) was set to 200 μm and the filling amount of the negatively chargeable particles was set to 30 % with respect to the space volume. The space surrounded by the partition walls was 300 μm × 300 μm × 200 μm (a distance between electrodes). As the color plate, use was made of the resin plate having a white color. In the image display panel mentioned above, the white display was performed, and the incident angle dependency of the reflection coefficient was measured according to the method shown in Fig. 27. The measured result was the same as that of the image display device shown in Fig. 26. Moreover, the visibility characteristic of the reflection coefficient was measured by the visibility angle measuring apparatus of the reflection coefficient shown in Fig. 30. The measured half bandwidth was 79°. Further, the reflection coefficient at 0° (a front of the image display device) was 20 %.

In the thus prepared image display panel, the white color displaying was performed, and brightness was measured by the luminance meter (BM7 manufactured by Topcon Corporation) from the front of the image display panel under such a condition that the lighted linear illuminant and the light guide plate were arranged on the image display panel. The measured brightness was 30 $cd/m^2$.

Example 2

The image display device having the construction shown in Figs. 23 and 24 including the following linear illuminant, light guide plate and image display panel was manufactured.

[Linear illuminant]

The linear illuminant having the angle distribution shown in Fig. 29 was manufactured. The linear illuminant had a three layers construction having a diameter of 2 mm such that core, clad and reflection-layer are arranged orderly from its center and white LED's were arranged at its both ends.

[Light guide plate]

The light guide plate having the construction shown in Fig. 24 and the V-recess angle of 40° (material: ARTON by JSR company) was manufactured. The plan dimension was 70 × 70 mm, the thickness was 1.0 mm at a portion other than the V-recess portion and 1.0 → 0.8 mm (wedge shape) at the V-recess portion. AR (Anti Reflection) treatment was subjected to a surface to which the V-recess was not arranged. The pitch of the V-recess was 175 μm.

[Image display panel using the chargeable particles ② mentioned above]

The image display panel having the display element shown in Fig. 5 was manufactured. As the transparent substrate, use was made of the glass substrate (thickness: 1.1 mm), and as the opposed substrate, use was made of the glass substrate (thickness: 1.1 mm). Moreover, the display electrode was formed by the ITO electrode and the opposed electrode was formed by the copper electrode. In order to prevent the particle adhesion on the surface of the electrode and to prevent the charge leakage, the silicone resin having the insulation property was coated with the thickness of about 3 μm. The height of the partition wall (a distance between electrodes) was set to 50 μm and the width thereof was set to 20 μm. The filling amount of the total chargeable particles was set to 70 % with respect to the space volume. The space surrounded by the partition walls was 350 μm × 350 μm × 50 μm (a distance between electrodes).

As the chargeable particles, the following black color particles and white color particles were prepared. The black color particles were produced in such a manner that acrylic urethane resin: EAU65B (Asia Industry Co., Ltd.)/ IPDI cross-linking agent: Excel-Hardener HX (Asia Industry Co., Ltd.), CB (Carbon Black) 4 phr, charge control agent: BontronN07 (Orient Chemical Industries Ltd.) 2 phr (here, phr means parts by weight with respect to 100 parts by weight of resin) were added, mixed, ground and classified by a jet-mill. The average particle diameter of the black particles was 9.2 μm. The white color particles were produced in such a manner that acrylic urethane resin: EAU53B (Asia Industry Co., Ltd.) / IPDI cross-linking agent: Excel-Hardener HX (Asia Industry Co., Ltd.), titanium oxide 10 phr, charge control agent: BontronE89 (Asia Industry Co., Ltd.) 2 phr were added, mixed, ground and classified by the jet-mill. The average particle diameter of the white color particles was 7.1 μm. The ratio between the negatively chargeable particles having the black color and the positively chargeable particles having the white color was set to 1 : 1. When the white displaying was performed in the image display panel mentioned above and the incident angle dependency of the reflection coefficient was measured according to the method shown in Fig. 27, the measured result was the same as that of the image display device shown in Fig. 26. Moreover, when the visibility angle characteristic of the reflection coefficient was measured by the visibility angle measuring apparatus of the reflection coefficient shown in Fig. 30, the half bandwidth was 79°. Moreover, the reflection coefficient at 0° (front of the image display device) was 35 %.

In the thus prepared image display panel, the white color displaying was performed, and brightness was measured under such a condition that the linear illuminant and the light guide plate thus prepared were arranged thereon. The measured brightness was 50 cd/$m^2$.

Example 3

The front brightness was measured in the manner as is the same as the example 1 by using the same image display device and the same linear illuminant as those of the example 1 and using the light guide plate having the V-recess angle of 25°. The measured front brightness was 30 cd/$m^2$.

Example 4

The front brightness was measured in the manner as is the same as the example 1 by using the same image display device and the same linear illuminant as those of the example 2 and using the light guide plate having the V-recess angle of 25°. The measured front brightness was 50 cd/$m^2$.

Comparative example 1

The front brightness was measured in the manner as is the same as the example 1 by using the same image display device and the same linear illuminant as those of the example 1 and using the light guide plate having the V-recess angle of 41°. The measured front brightness was 25 cd/$m^2$.

Comparative example 2

The front brightness was measured in the manner as is the same as the example 1 by using the same image display device and the same linear illuminant as those of the example 1 and using the light guide plate having the V-recess angle of 24°. The measured front brightness was 25 cd/$m^2$.

Comparative example 3

The front brightness was measured in the manner as is the same as the example 1 by using the same image display device and the same linear illuminant as those of the example 2 and using the light guide plate having the V-recess angle of 41°. The measured front brightness was 42 cd/$m^2$.

Comparative example 4

The front brightness was measured in the manner as is the same as the example 1 by using the same image display device and the same linear illuminant as those of the example 2 and using the light guide plate having the V-recess angle of 24°. The measured front brightness was 42 cd/$m^2$.

Comparative example 5

The brightness of the liquid crystal display device (commercially available liquid crystal of the reflection type), in which the white color displaying was performed, was measured by using the same linear illuminant and the same light guide plate as those of the example 2. The measured brightness was 12 cd/$m^2$.

According to the image display device regarding to the first aspect of the invention, since the light emission means for emitting a light more effectively to the image display surface of the image display means is provided, the excellent visibility of the displayed image can be achieved. Particularly, if use is made of the image display means in which the chargeable particles are moved between the electrodes so as to display the image, especially the image display means in which the chargeable particles are moved between the electrodes by means of an electrostatic force, it is possible to obtain the image display device having the rapid response rate of the image displaying/ deleting, repeated stability and excellent durability. In addition, the image display device constructed mainly by the image display means and the light emission means mentioned above can be provided with a simple construction and an inexpensive cost.

<Explanation of the second aspect of the invention>

Then, the image display device according to the second aspect of the invention will be explained. Also in the image display device according to the second aspect of the invention, use is made of the image display device having the same construction as mentioned above, and the same particles and the same liquid powders as mentioned above are utilized.

The feature of the image display device according to the second aspect of the invention is that, in the image display panel having the construction mentioned above, a color filter is arranged to an outer surface or an inner surface of the transparent substrate of the image display panel so as to perform a color displaying on the surface to which the transparent substrate is existent.

Specifically, it is assumed that: one pixel of the image is constructed by three units (in this case use may be made of a multiple of three) for example of the image display element shown in Fig. 6; RGB color filters 163R, 163G, 163B are provided on an outer surface of the transparent substrate 151 of respective image display elements 162 as shown in Figs. 32a and 32b; and for example a color of the negatively chargeable particles 155 is white and a color of the positively chargeable particles 156 is black. In this case, it is possible to perform a color displaying on a surface of the image display panel 161 to which the color filters 163R, 163G, 163B are provided by controlling a direction and strength of an electrostatic field generated by a pair of electrodes constructed by the display electrode 153 and the opposed electrode 154 in respective image display elements 162.

In the color displaying, the black color displaying can be performed by controlling the particles in such a manner that the black color particles exist on all the surfaces of the image display elements 162 at a side to which the color filters 163R, 163G, 163B are arranged; the white color displaying can be performed by controlling the particles in such a manner that the white color particles exist on all the surfaces of the image display elements 162 at a side to which the color filters 163R, 163G, 163B are arranged so as to synthesize RGB colors; and the other color displaying can be performed by controlling an amount of the white color particles on respective surfaces of the image display elements 162 to which the color filters 163R, 163G, 163B are arranged so as to synthesize RGB colors.

In the embodiments mentioned above, the explanation is made to the example in which the color filters 163R, 163G, 163B are arranged to an outer surface of the transparent substrate 151, but it is apparent that the same effects can be obtained if the color filters 163R, 163G, 163B are arranged to an inner surface of the transparent substrate 151. In this case, the color filters 163R, 163G, 163B may be arranged to an outer side or an inner side of the transparent display electrode 153. Moreover, in the embodiments mentioned above, the explanation is made to the image display panel having the construction shown in Fig. 6 in which the display electrode is arranged to the transparent substrate 151 and the opposed electrode 154 is arranged to the opposed substrate 152, but it is apparent that the same effects can be obtained if use is made of the image display panel having the construction shown in Fig. 5 in which the display electrode and the opposed electrode are arranged to the opposed substrate.

Further, in the image display device according to the second aspect of the invention mentioned above, the explanation is made to the example in which the image display is performed by using the particles (first embodiment), but the same explanation can be applied to the example in which the image display is performed by using the liquid powders (second embodiment).

In the image display device according to the second aspect of the invention, the color filter having different colors of R(red), G(green) and B(blue) is arranged to the outer surface or the inner surface of the transparent substrate. Then, one pixel of the color displaying is constructed by three image display elements to which at least one of R, G and B of the color filter are arranged respectively, and one of the particles or liquid powders is made to be the white color, while the other is made to be the black color. Under such a condition, the white color particles or liquid powders are made to be existent to the display surface so as to display the R, G or B color of the color filter, while the black color particles or liquid powders are made to be existent to the display surface so as to display the black color, so that it is possible to perform the color displaying. In this manner, it is possible to realize a high grade color image display.

The image display device according to the first aspect and the second aspect of the invention is applicable to the image display unit for mobile equipment such as notebook personal computers, PDAs, cellular phones and so on; to the electric paper for electric book, electric newspaper and so on; to the bulletin boards such as signboards, posters, blackboards and so on; to the rewritable paper substituted for a paper of copy machine, printer and so on; to the image display unit for electric calculator, home electric application products, auto supplies and so on; to the electric advertisement; and to the electric POP and so on.

INDUSTRIALLY APPLICABILITY

As clearly understood from the above explanations in the image display device according to the first aspect of the invention, since the light emission means for emitting a light more effectively with respect to the image display surface of the image display means is provided, a visibility of the image to be displayed becomes excellent. Particularly, when use is made of the image display means in which the charged particles are moved between the electrodes so as to display an image, especially when use is made of the image display means in which the charged particles are moved between the electrodes by means of an electrostatic force, it is possible to obtain the image display device having rapid response rate of image display/deletion, excellent repeatable stability and excellent durability. In addition, the image display device according to the invention constructed mainly by the image display means and the light emission means mentioned above has a simple construction and an inexpensive cost.

Moreover, in the image display device according to the second aspect of the invention, the color filter having different colors of R(red), G(green) and B(blue) is arranged to the outer surface or the inner surface of the transparent substrate. Then, one pixel of the color displaying is constructed by three image display elements to which at least one of R, G and B of the color filter are arranged respectively, and one of the particles or liquid powders is made to be the white color, while the other is made to be the black color. Under such a condition, the white color particles or liquid powders are made to be existent to the display surface so as to display the R, G or B color of the color filter, while the black color particles or liquid powders are made to be existent to the display surface so as to display the black color, so that it is possible to perform the color displaying. In this manner, it is possible to realize a high grade color image display.

## Claims

1. An image display device **characterized in that** the improvement comprises: an image display means for displaying an image by moving chargeable particles arranged between electrodes by means of a voltage applied to the electrodes; and a light emission means for emitting a light to an image display surface of the image display means.

2. The image display device according to claim 1, wherein the particles are constructed by particles having the same color and the same charge characteristics.

3. The image display device according to claim 1, wherein the particles are constructed by particles having different colors and different charge characteristics.

4. The image display device according to one of claims 1 - 3, wherein the particles are arranged in a space defined by partition walls.

5. The image display device according to claim 4, wherein the partition walls are arranged around the space and the image display means has a plurality of pixels defined by the partition walls.

6. The image display device according to claim 4 or 5, wherein a first electrode is arranged in the space at a side of the image display surface and a second electrode is arranged at the other side thereof.

7. The image display device according to claim 4 or 5, wherein both of a first electrode and a second electrode are arranged in the space at a reverse side of the image display surface.

8. The image display device according to one of claims 4 - 7, wherein a gas is filled in the space.

9. The image display device according to one of claims 4 - 8, wherein the space is a pressure reduction state of 105 - 10-4 Pa.

10. The image display device according to one of claims 1 - 9, wherein the light emission means comprises a linear illuminant extending along a peripheral of the image display means.

11. The image display device according to claim 10, wherein the light emission means comprises a light guide plate arranged at a front surface of the light display surface of the image display means, and a light emitted from the linear illuminant to a side surface or a rear surface of the light guide plate is reflected by the light guide plate and is emitted to the image display surface.

12. The image display device according to claim 11, wherein the light guide plate comprises a substrate for introducing a light from its side surface or a rear surface, a dotted or linear reflection-layer arranged to the substrate for reflecting a light toward the image display surface, and a dark color-layer arranged to a view surface of the reflection-layer.

**13.** The image display device according to claim 11, wherein a V-recess having a prism surface used for reflecting a light emitted from the linear illuminant to the image display surface is arranged to a surface of the light guide plate, and a V-recess angle defined by an angle of the prism surface of the V-recess with respect to a surface of the light guide plate is set to 25° - 40°.

**14.** The image display device according to claim 13, wherein a reflective property in the case of a white color displaying is such a state that an angle of incident light, at which a reflection coefficient is 0.5 in the case that an angle of incident light is varied by 15° - 90° and a reflection coefficient at 15°, is not less than 40°.

**15.** The image display device according to claim 13, wherein a view angle in the case of a white color displaying is not less than 40° at one side on a half bandwidth.

**16.** The image display device according to one of claims 1 - 15, wherein the image display means and the light emission means have flexibility.

**17.** The image display device according to one of claims 1 - 16, wherein the image display comprises the image display surface at its both surfaces.

**18.** The image display device according to one of claims 1 - 17, wherein as the particles use is made of liquid powders, which indicate a high fluidity in an aerosol state such that solid-like substances are suspended in a gas stably as dispersoid.

**19.** An image display device which comprises an image display panel, in which two or more groups of particles having different colors and different charge characteristics are sealed between opposed two substrates, at least one of two substrates being transparent, and, in which the particles, to which an electrostatic field produced by a pair of electrodes provided on one substrate or both substrates respectively is applied, are made to move so as to display an image, **characterized in that** a color filter is arranged to an outer surface or an inner surface of a transparent substrate of the image display panel so as to perform a color displaying.

**20.** The image display device according to claim 19, wherein an average particle diameter of the particles is 0.1 - 50 μm.

**21.** The image display device according to claim 19 or 20, wherein the surface charge density in an absolute value of the particles measured by using the carrier in accordance with a blow-off method is 5 - 150 $\mu C/m^2$.

**22.** The image display device according to one of claims 19 - 21, wherein the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the discharge.

**23.** An image display device which comprises an image display panel, in which the liquid powders, which indicate a high fluidity in an aerosol state such that solid-like substances are suspended in a gas stably as dispersoid, are sealed between opposed two substrates, at least one of two substrates being transparent, and, in which the liquid powders, to which an electrostatic field produced by a pair of electrodes provided on one substrate or both substrates respectively is applied, are made to move so as to display an image, **characterized in that** a color filter is arranged to an outer surface or an inner surface of a transparent substrate of the image display panel so as to perform a color displaying.

**24.** The image display device according to claim 23, wherein an apparent volume in a maximum floating state of the liquid powders is two times or more than that in none floating state.

**25.** The image display device according to claim 23 or 24, wherein a time change of the apparent volume of the liquid powders satisfies the following formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state.

**26.** The image display device according to one of claims 23 - 25, wherein an average particle diameter d(0.5) of the solid-like substances composing the liquid powders is 0.1 - 20 μm.

FIG. 1a

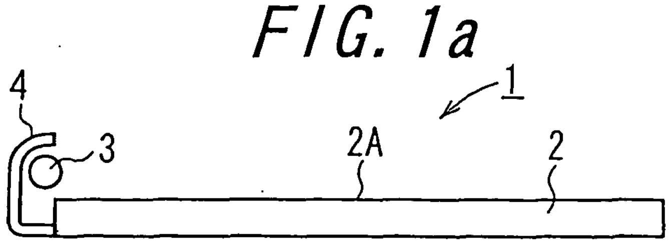


FIG. 1b

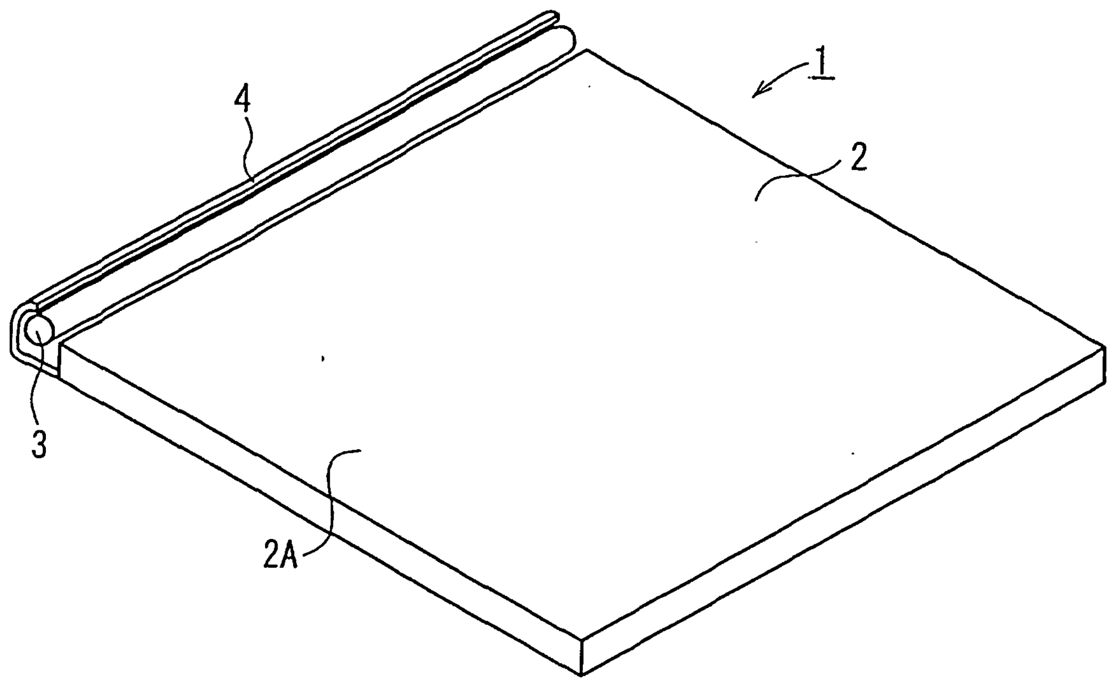


FIG. 1c

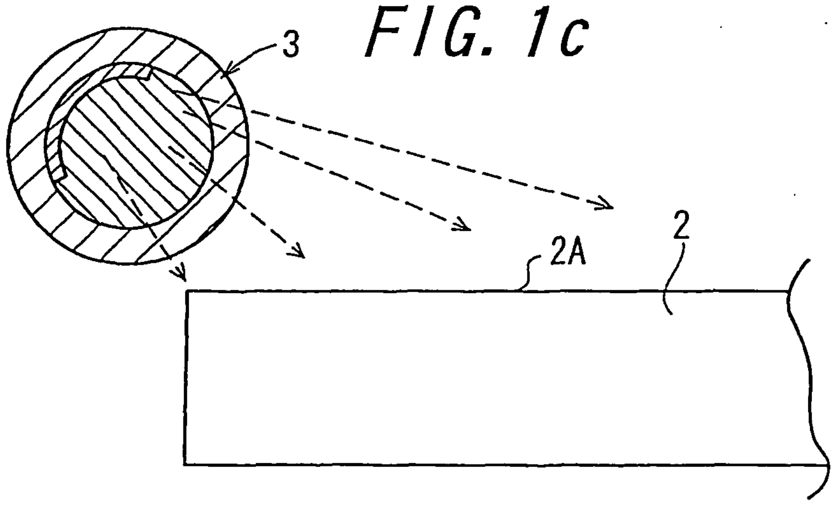

FIG. 2a

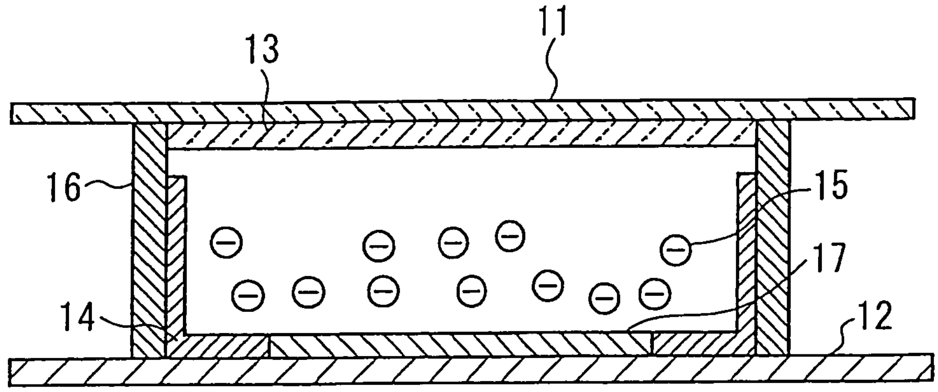


FIG. 2b

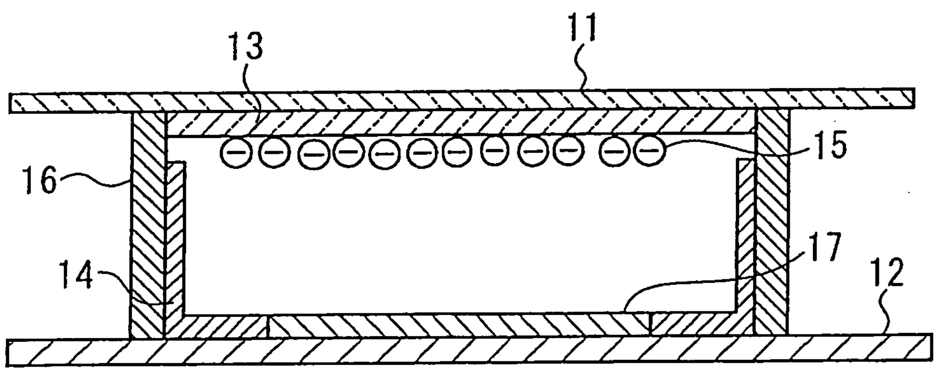


FIG. 2c

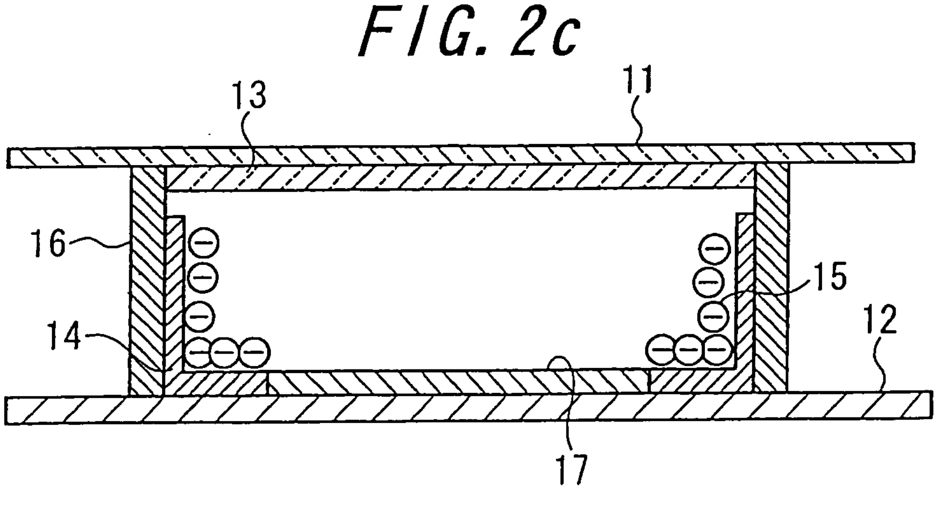

FIG. 3a

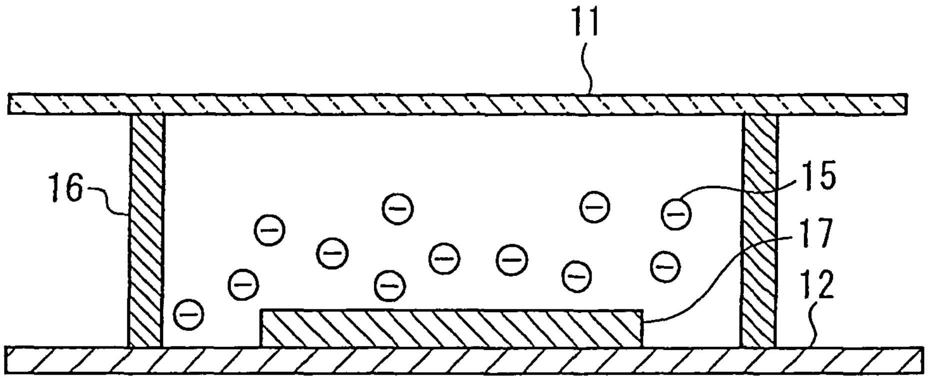


FIG. 3b

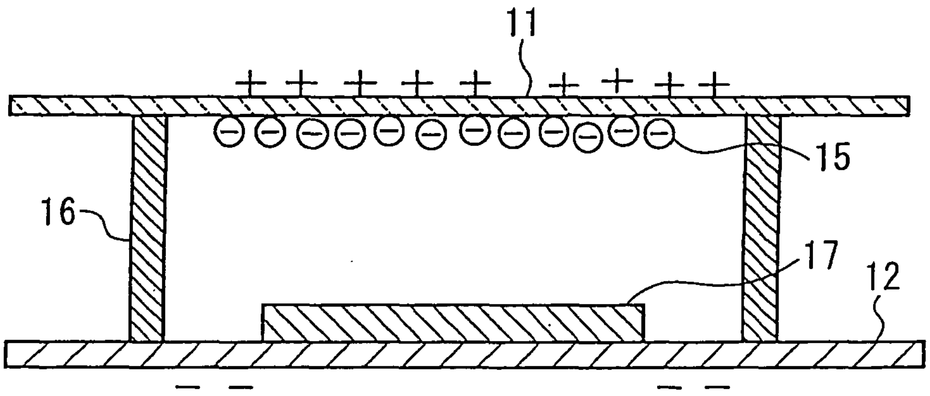


FIG. 3c

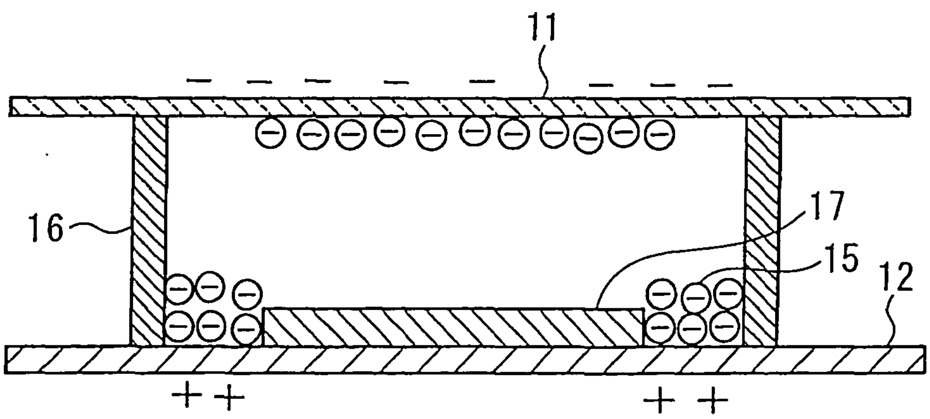

FIG. 4a

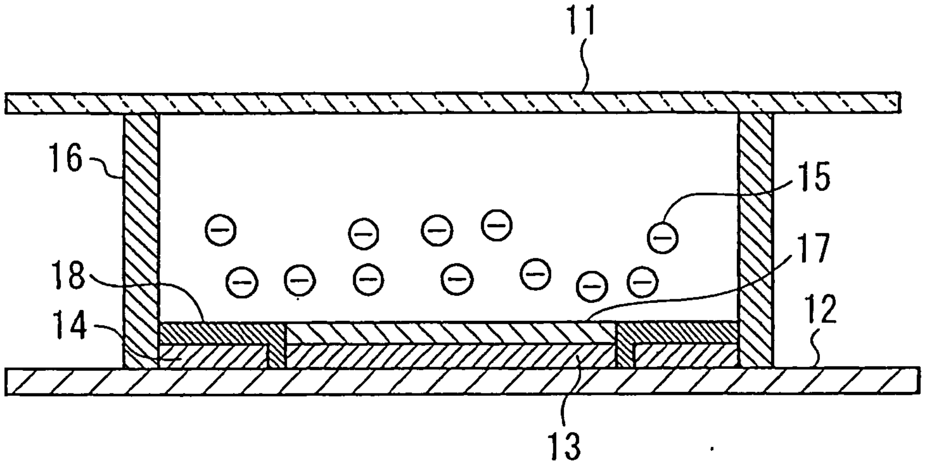


FIG. 4b

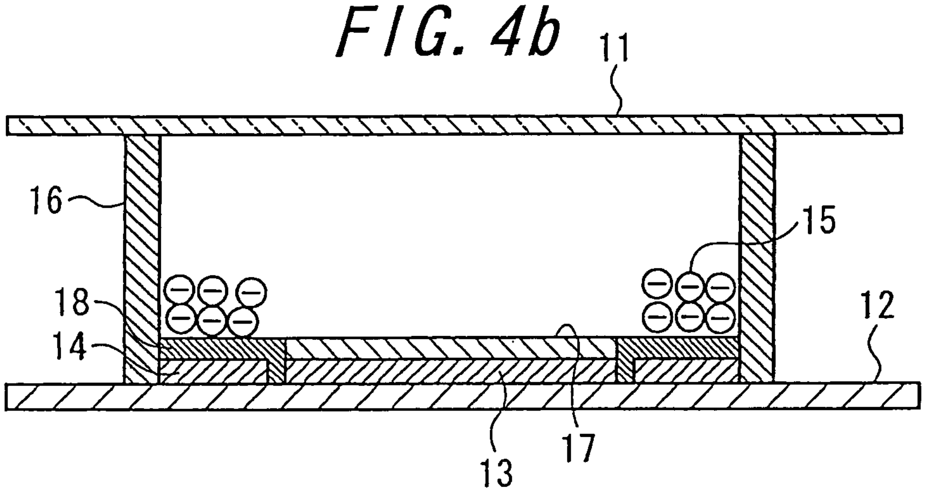


FIG. 4c

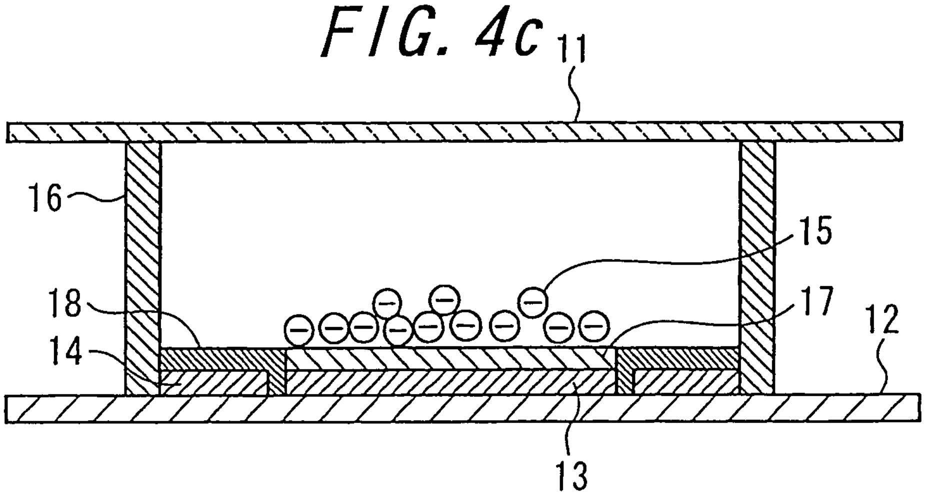

FIG. 5a

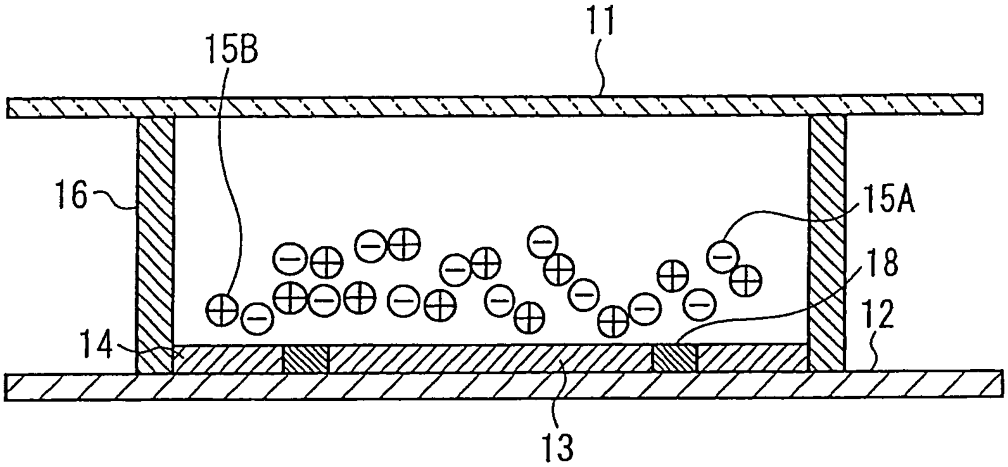


FIG. 5b

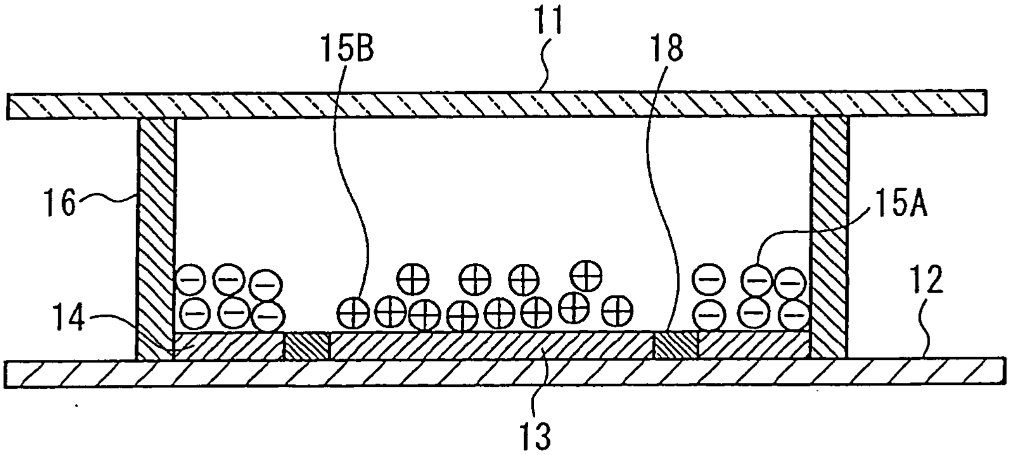


FIG. 5c

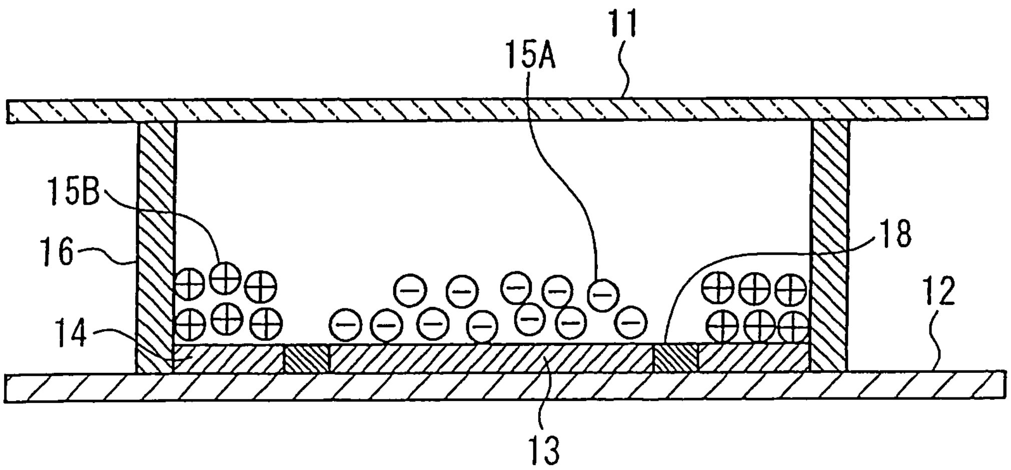

FIG. 6a

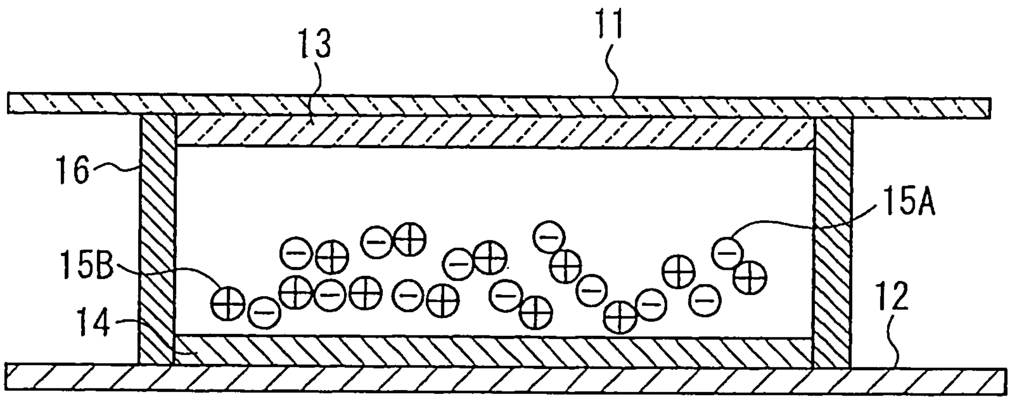


FIG. 6b

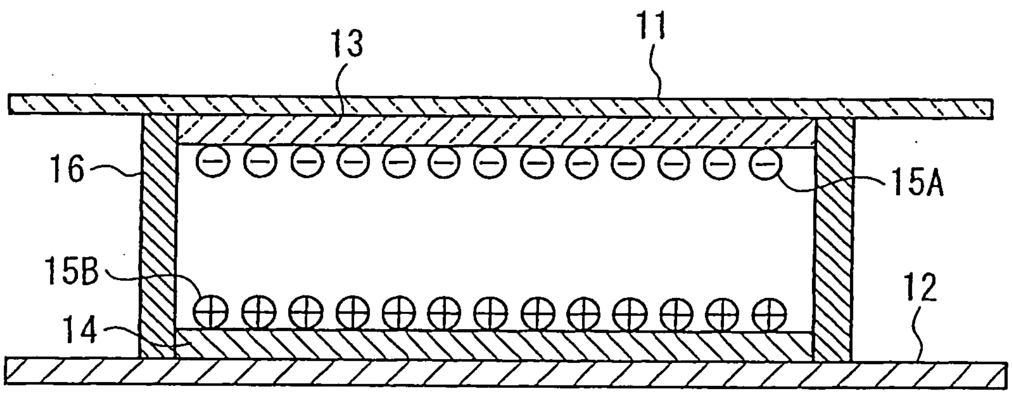


FIG. 6c

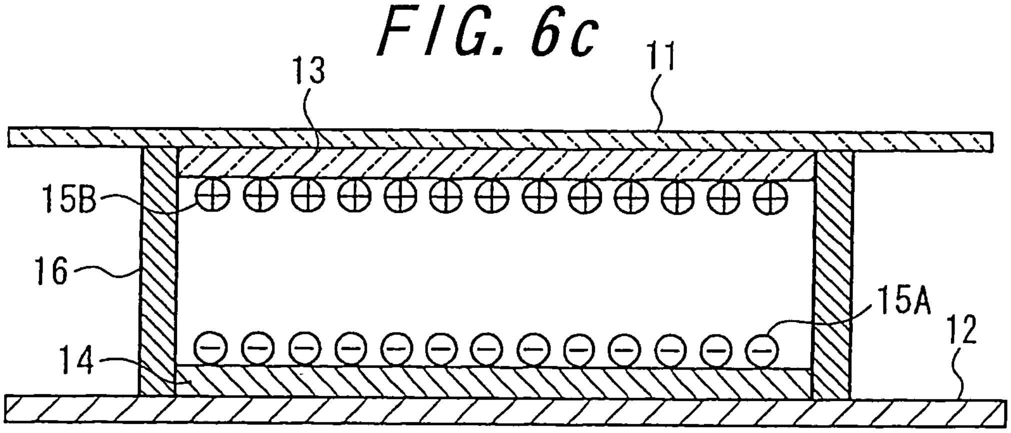

FIG. 7

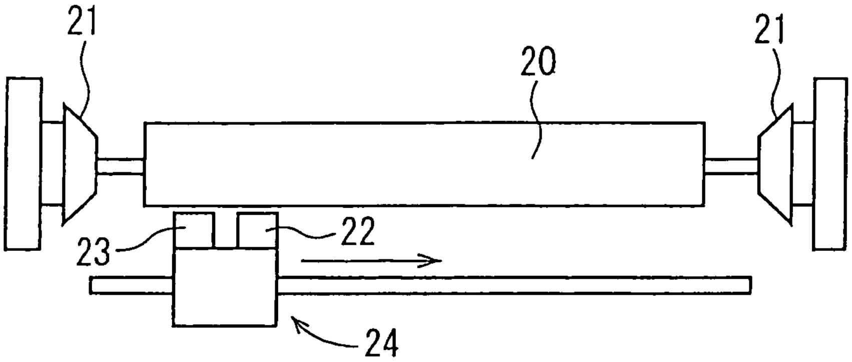


FIG. 8

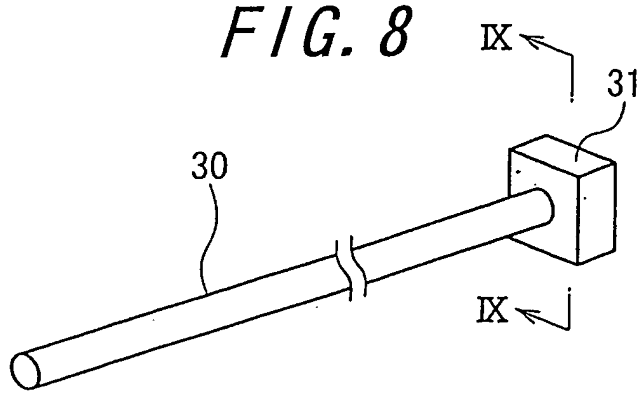


FIG. 9

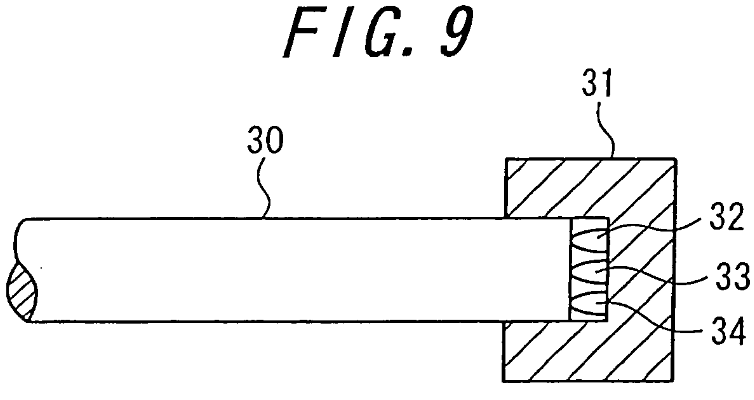

FIG. 10

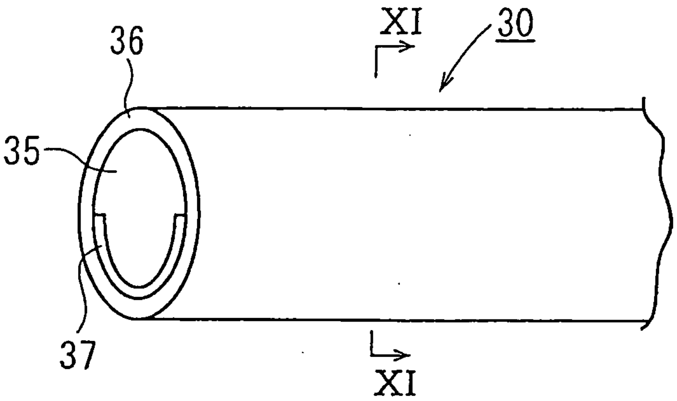


FIG. 11

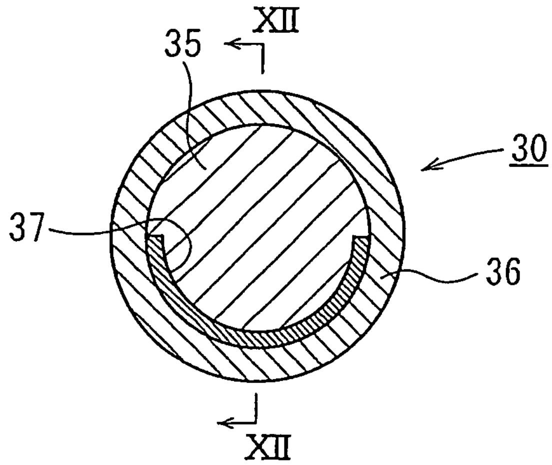


FIG. 12

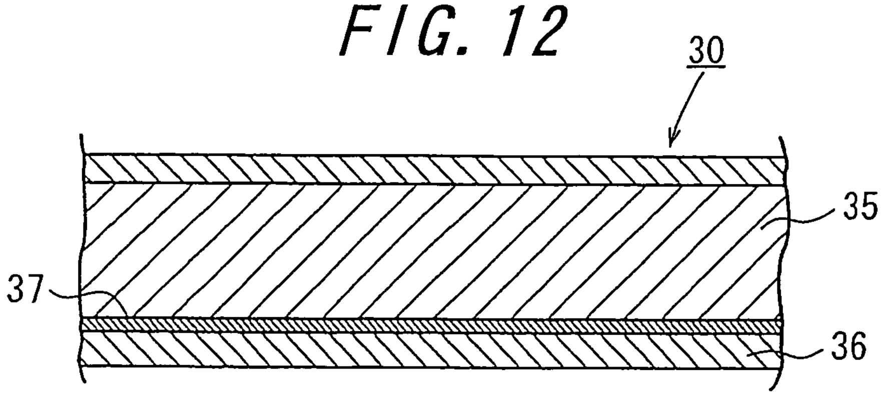

FIG. 13

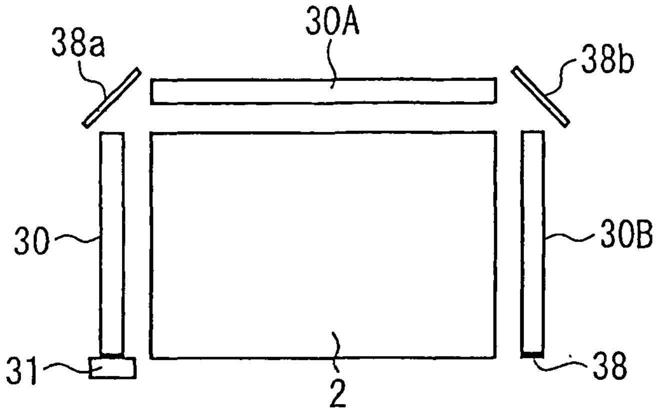


FIG. 14

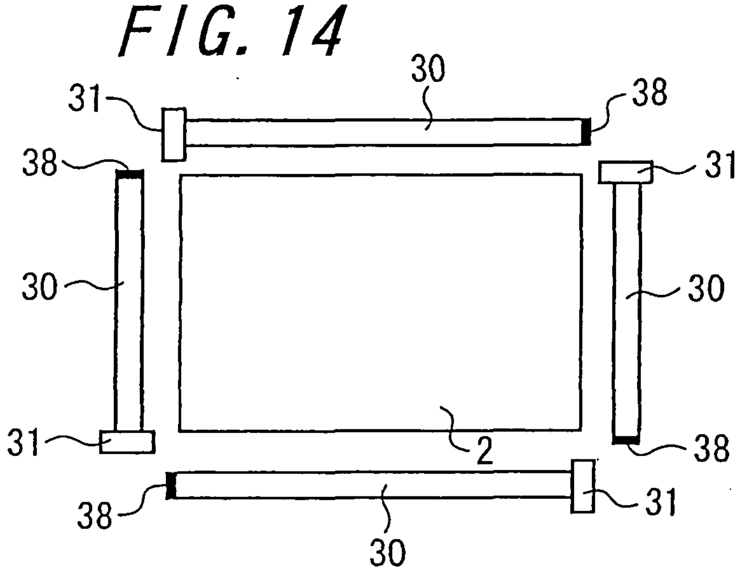


FIG. 15

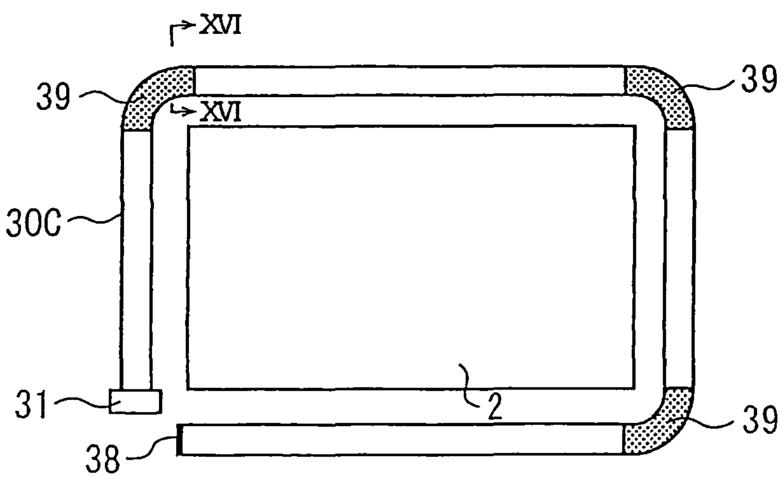

FIG. 16

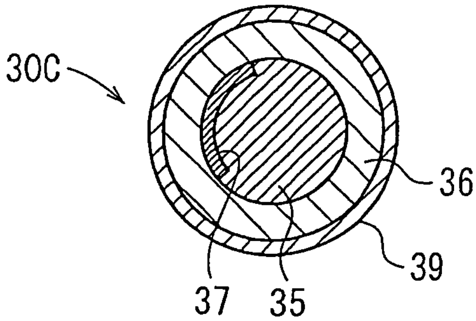


FIG. 17

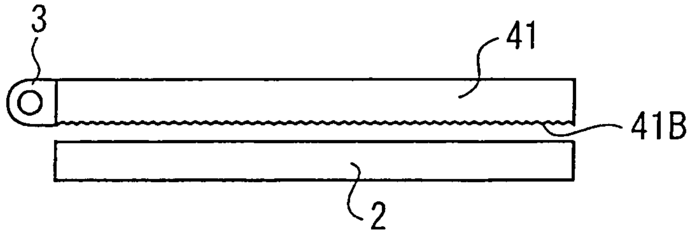


FIG. 18

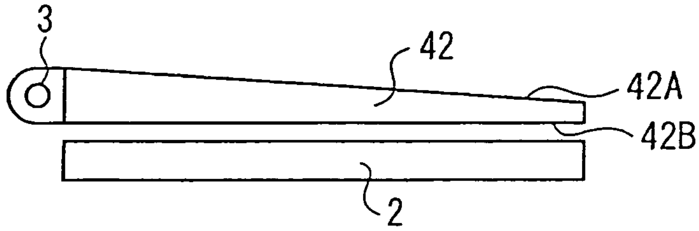


FIG. 19

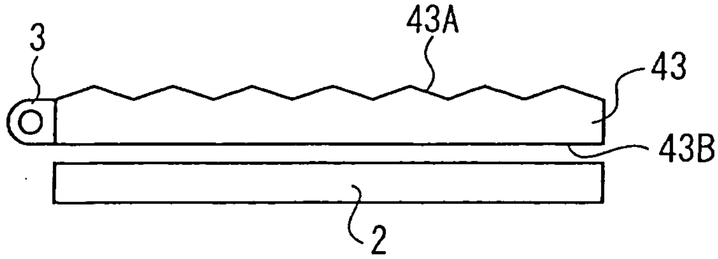

FIG. 20

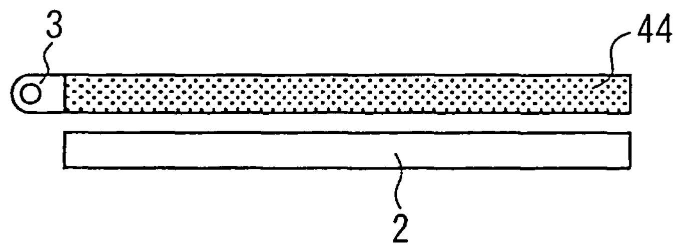


FIG. 21

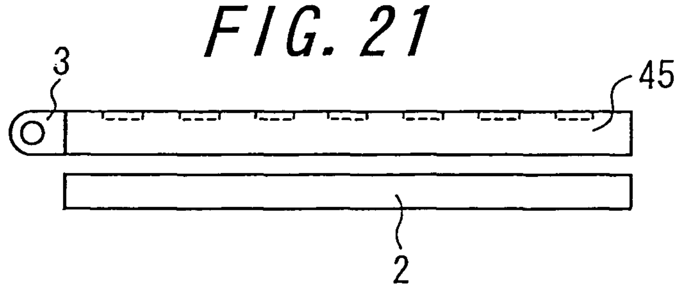


FIG. 22

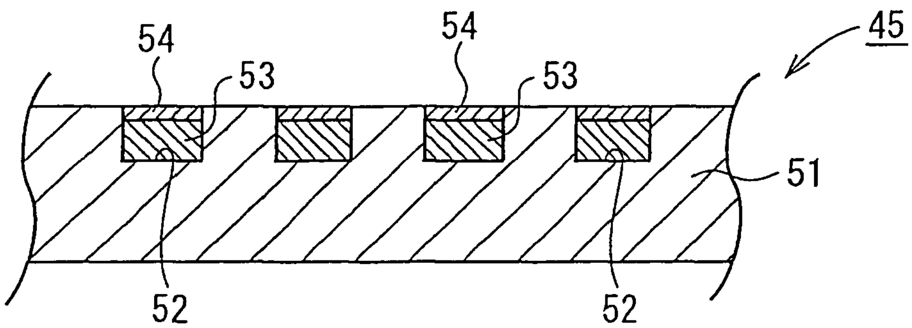

FIG. 23a

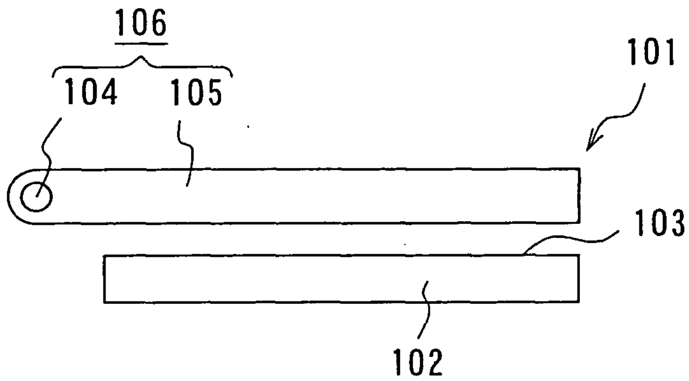


FIG. 23b

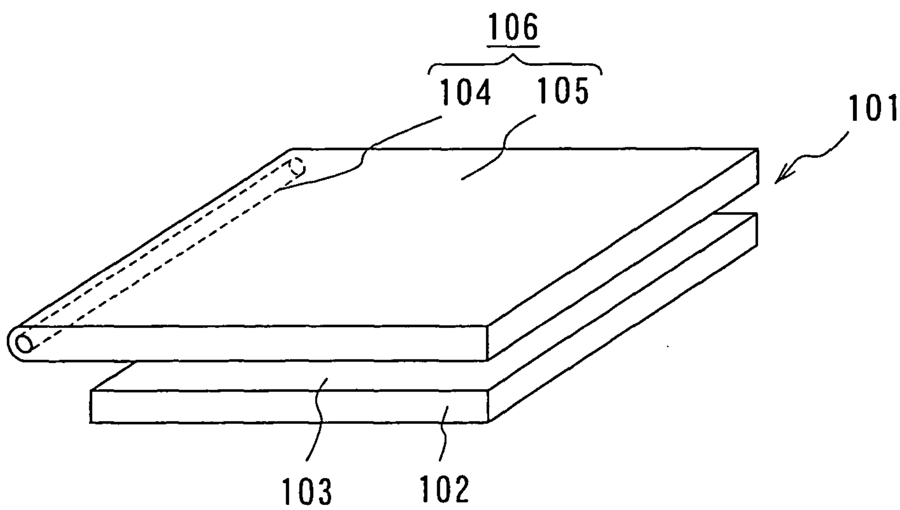

FIG. 24

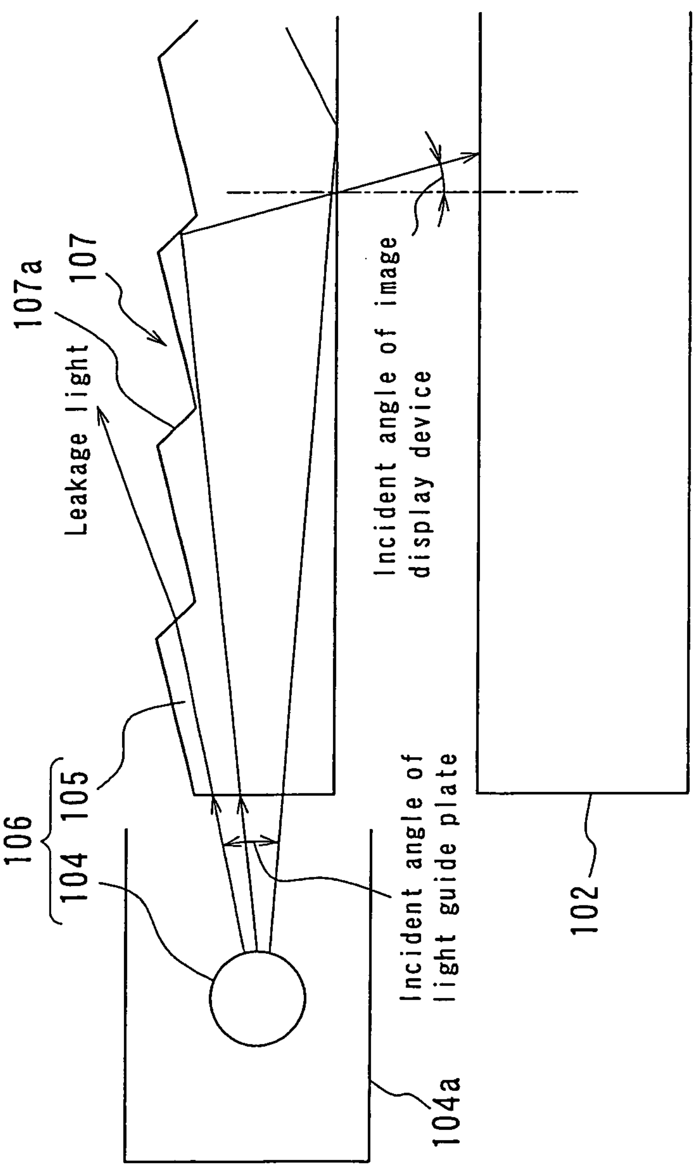
106
104
105
107a
107
Leakage light
Incident angle of image display device
Incident angle of light guide plate
102
104a

FIG. 25

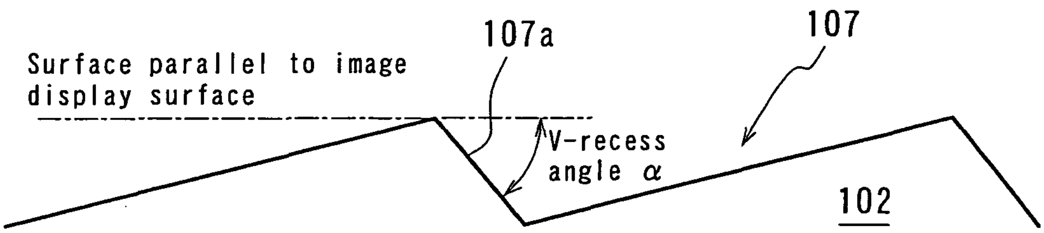
107a
107
Surface parallel to image display surface
V-recess angle α
102

FIG. 26

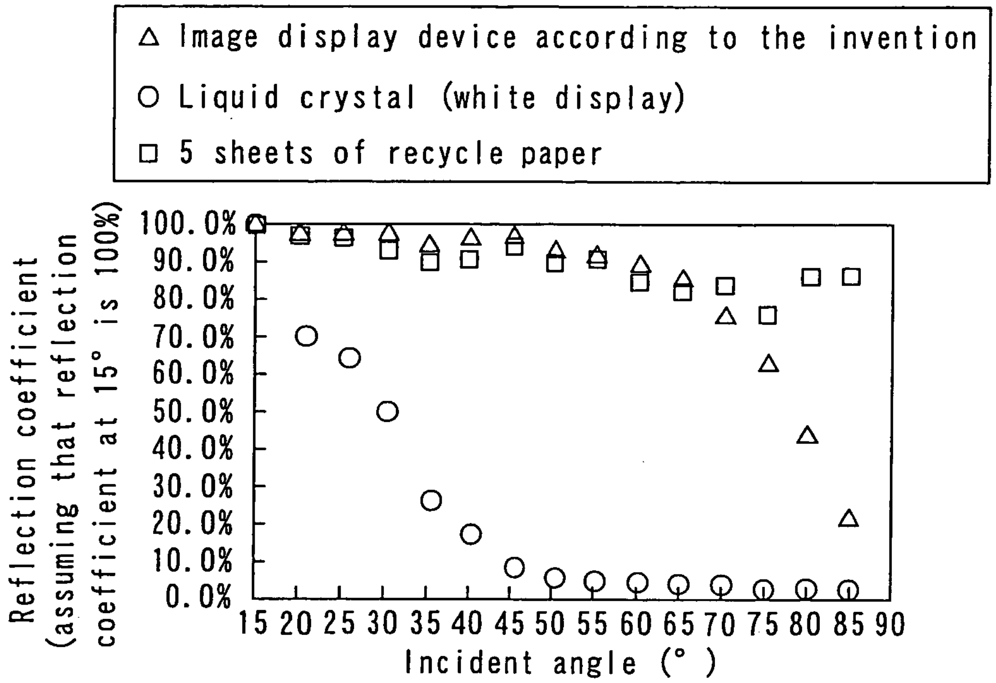
△ Image display device according to the invention
○ Liquid crystal (white display)
□ 5 sheets of recycle paper
Reflection coefficient
(assuming that reflection coefficient at 15° is 100%)
100.0%
90.0%
80.0%
70.0%
60.0%
50.0%
40.0%
30.0%
20.0%
10.0%
0.0%
15 20 25 30 35 40 45 50 55 60 65 70 75 80 85 90
Incident angle (° )

FIG. 27

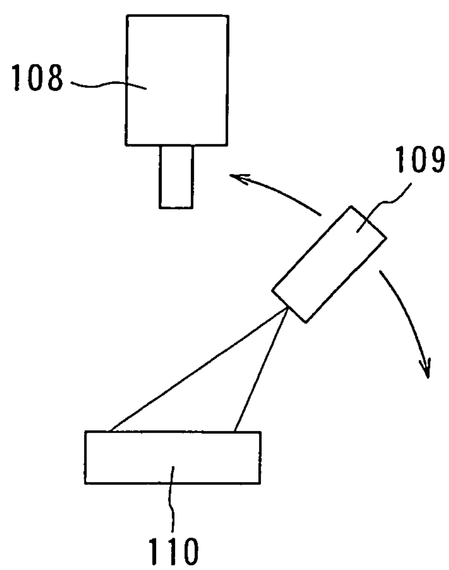
108
109
110

FIG. 28

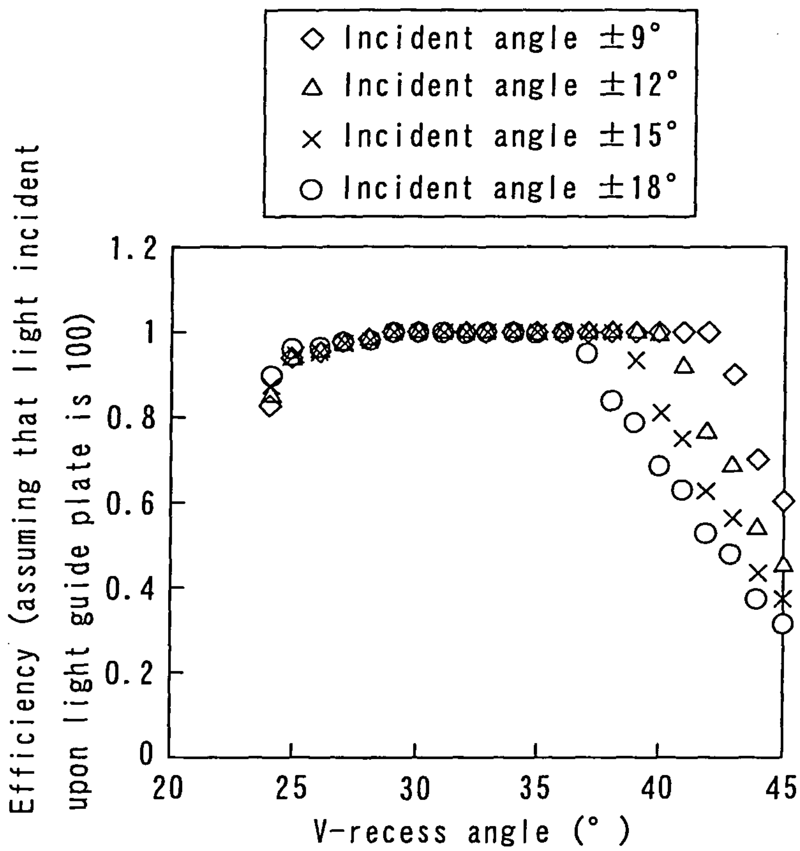
Incident angle ±9°
Incident angle ±12°
Incident angle ±15°
Incident angle ±18°
Efficiency (assuming that light incident upon light guide plate is 100)
1.2
1
0.8
0.6
0.4
0.2
0
20
25
30
35
40
45
V-recess angle (°)

FIG. 29

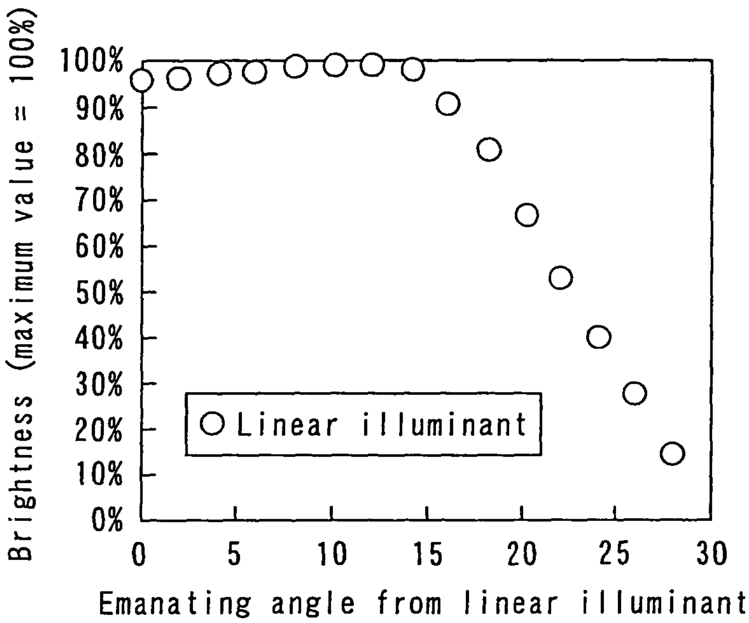
Brightness (maximum value = 100%)
100%
90%
80%
70%
60%
50%
40%
30%
20%
10%
0%
Linear illuminant
0
5
10
15
20
25
30
Emanating angle from linear illuminant

FIG. 30

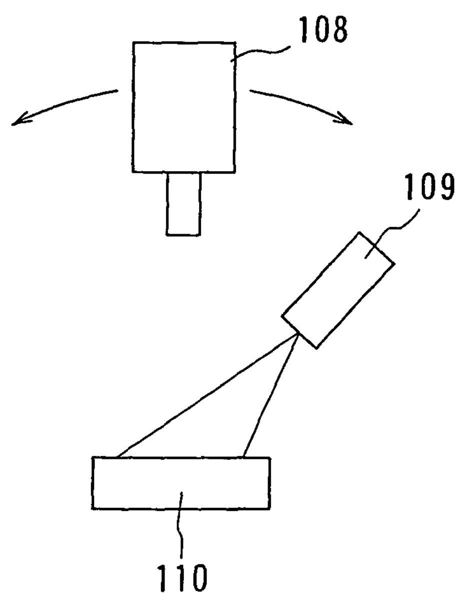
108
109
110

FIG. 31

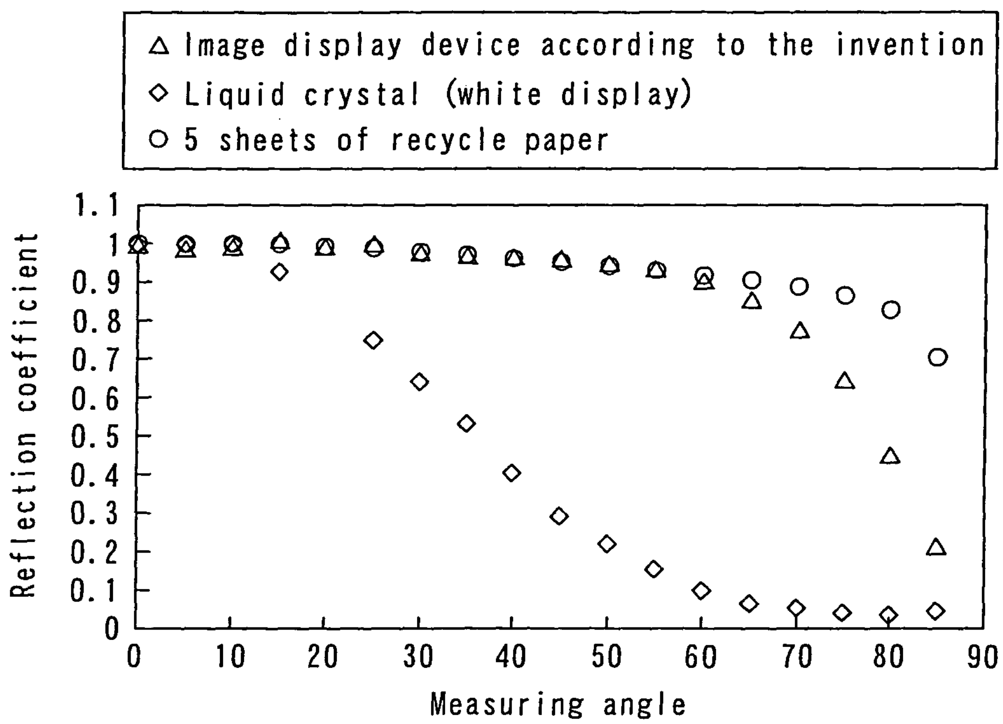

△ Image display device according to the invention
◇ Liquid crystal (white display)
○ 5 sheets of recycle paper
Reflection coefficient
1.1
1
0.9
0.8
0.7
0.6
0.5
0.4
0.3
0.2
0.1
0
0
10
20
30
40
50
60
70
80
90
Measuring angle

FIG. 32a

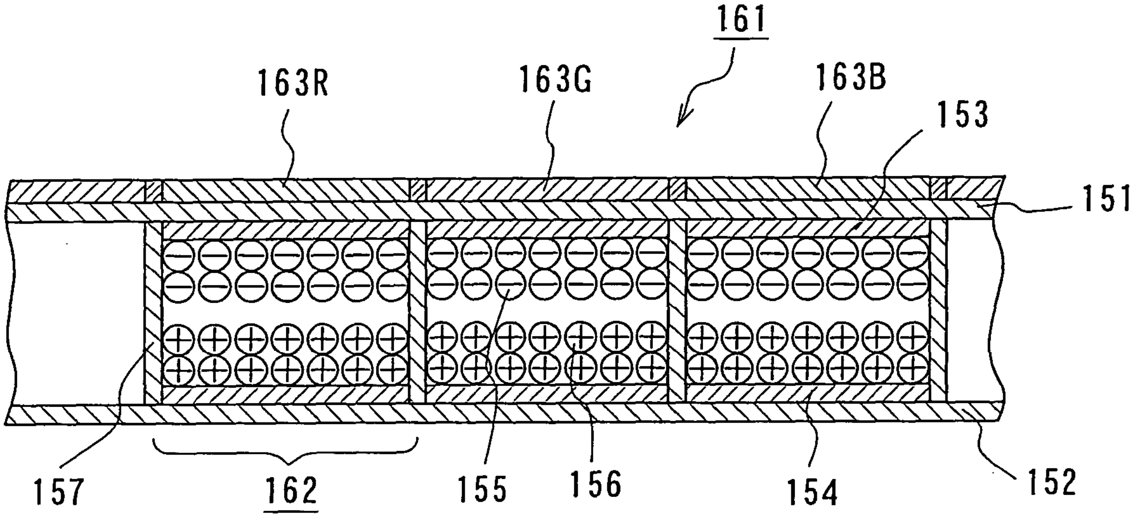


FIG. 32b

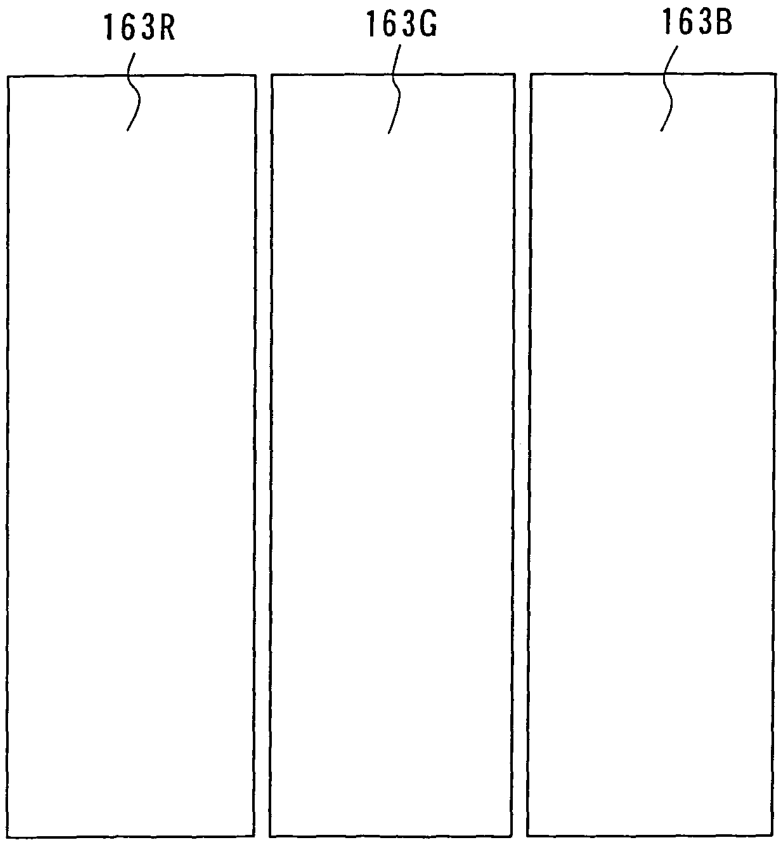

## INTERNATIONAL SEARCH REPORT

International application No.
PCT/JP03/09025

A. CLASSIFICATION OF SUBJECT MATTER
Int.Cl[7] G02F1/17, G09F9/00, G09F9/37

According to International Patent Classification (IPC) or to both national classification and IPC

B. FIELDS SEARCHED

Minimum documentation searched (classification system followed by classification symbols)
Int.Cl[7] G02F1/17, G09F9/00, G09F9/37

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JSTPuls(JOIS)

C. DOCUMENTS CONSIDERED TO BE RELEVANT

| Category* | Citation of document, with indication, where appropriate, of the relevant passages | Relevant to claim No. |
|---|---|---|
| X | US 2002/50976 A1 (FUJI XEROX CO., LTD.), 02 May, 2002 (02.05.02), Full text; all drawings & JP 2002-139750 A | 1,3-6,8,10, 11,13-15, 18-20,23,26 |
| X<br>Y | JP 2002-169191 A (FUJI XEROX CO., LTD.), 14 June, 2002 (14.06.02), Par. Nos. [0142] to [0151] (Family: none) | 1,2,18-20, 23,16<br>7 |
| Y | JP 2000-171839 A (Canon Inc.), 23 June, 2000 (23.06.00), Full text; all drawings (Family: none) | 7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 October, 2003 (16.10.03) | Date of mailing of the international search report<br>28 October, 2003 (28.10.03) |
| Name and mailing address of the ISA/<br>Japanese Patent Office<br><br>Facsimile No. | Authorized officer<br><br>Telephone No. |

Form PCT/ISA/210 (second sheet) (July 1998)

**INTERNATIONAL SEARCH REPORT**

International application No.
PCT/JP03/09025

C (Continuation). DOCUMENTS CONSIDERED TO BE RELEVANT

| Category* | Citation of document, with indication, where appropriate, of the relevant passages | Relevant to claim No. |
|---|---|---|
| E,X | JP 2002-311461 A (Sharp Corp.),<br>23 October, 2002 (23.10.02),<br>Par. No. [0027]; Fig. 3<br>(Family: none) | 7 |

Form PCT/ISA/210 (continuation of second sheet) (July 1998)

**INTERNATIONAL SEARCH REPORT**

International application No.
PCT/JP03/09025

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(See extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-8, 10, 11, 13-15, 18-20, 23, 26

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP03/09025

Continuation of Box No. II of continuation of first sheet (1)

The technique feature common to claims 1-26 is to provide an image display panel for displaying an image by moving particles. The technique feature common to claims 1-18 is to provide illuminating means for illuminating an image display surface with light. The technique feature common to claims 19-22 is to provide a color filter.

However, the international search has revealed that these technical features are not novel since they are disclosed in documents US 2002/50976 A1 (FUJI ZEROX CO., LTD.), 2 May, 2002 (02.05.02) or JP 2002-169191 A (FUJI ZEROX CO., LTD.), 14 June, 2002 (14.06.02). Consequently, the common features are not special technical features within the meaning of PCT Rule 13.2, second sentence, since they make no contribution over the prior art. Therefore, there is no feature common to all the claims.

There are following technique features in the inventions of claims 1-18.

The technical feature of claim 7 is to provide first and second electrodes on the image display surface and the back surface, respectively.
The technical feature of claim 9 is that a space is in a reduced-pressure state.
The technical feature of claim 12 is that a light guide plate has dispersed reflective layers or a linear reflective layer and a dark color layer provided on the viewed surface of the reflective layer.
The technical feature of claim 16 is that image display means and illuminating means are flexible.
The technical feature of claim 17 is that image display surfaces are provided on both sides.

There are following technique features in the inventions of claims 19-26.

The technical feature common to claims 21, 22 relates to the particle surface charge density or surface potential.
The technical feature common to claims 24, 25 is the apparent volume of a powdery fluid.

Therefore the inventions of claims 1-8, 10, 11, 13-15, 18-20, 23, 26 are prior arts or involve a technical feature that first and second electrodes are provided on the image display surface and the back surface, respectively. Consequently, the claims, claim 9, claim 12, claim 16, claim 17, claims 21, 22, and claims 24, 25 do not satisfy the requirement of unity of invention.

Form PCT/ISA/210 (extra sheet) (July 1998)